# EUROPEAN PATENT SPECIFICATION

(11) **EP 3 563 334 B1**
(45) Date of publication and mention of the grant of the patent: **12.08.2026**
(21) Application number: 17836035.0
(22) Date of filing: 29.12.2017
(51) Int. Cl.: G06Q 10/04, G05B 17/02, G06Q 50/06

(54) **STATE OF CHARGE ESTIMATION OF ENERGY STORAGE SYSTEMS**
SCHÄTZUNG DER ENERGIE LAGERUNGSSYSTEME
ESTIMATION DE L'ÉTAT DE CHARGE DES SYSTÈMES DE STOCKAGE D'ÉNERGIE

(30) Priority: 30.12.2016 EP 16207504
(43) Date of publication of application: 06.11.2019
(73) Proprietor: VITO NV, 2400 Mol (BE)
(72) Inventor: DIRIKEN, Jan Victor J., 2400 Mol (BE); DE RIDDER, Fedor, 2400 Mol (BE); VAN BAEL, Johan Frans, 2400 Mol (BE)
(74) Representative: Oryon NV
(86) International application number: PCT/EP2017/084853
(87) International publication number: WO 2018/122392

(56) References cited:
- EP-A1- 2 688 015
- WO-A1-2015/077754
- GB-A- 2 448 896
- US-A1- 2011 272 117
- US-A1- 2012 232 701
- US-A1- 2017 206 615
- DAVID SANTIAGO ET AL: "Model to determine the state of charge of water as a phase change material integrated in a household refrigerator Full Name of Student: Academic Supervisor: On -Site Supervisor", 2 December 2013 (2013-12-02), XP055348291, Retrieved from the Internet <URL:http://repositorio.educacionsuperior.gob.ec/bitstream/28000/1376/1/T-SENESCYT-00527.pdf> [retrieved on 20170221]
- THOMAS BAUER ET AL: "New Measurement Systems for PCM Storage", 26 June 2012 (2012-06-26), XP055348295, Retrieved from the Internet <URL:http://sfera.sollab.eu/downloads/JRA/WP15/SFERA_R15.4_New_measurement_systems_of_latent_HSM.pdf> [retrieved on 20170221]

## Description

The present invention relates to an automated system and method to estimate the energy content of energy storage media, like heat or cold buffers, for example using single phase or PCM materials, or batteries, and the like.

### Background

For some materials like water heating buffers, the heat capacity is directly proportional to the temperature, while for other materials, like PCM's, the relation is more complicated.

PCM's are materials which can change their phase, e.g. solid to liquid. The latent heat associated with this process allows such materials to store a lot heat in a small temperature range. This makes such materials suited in e.g. buildings to regulate temperature or in storage media where the volume is constraint.

If such storage tanks are used in a heating network or in combination with thermal systems (heat pumps, CHP, etc.), it is important to know the state of charge.

In particular, two problems complicate the relation between temperature and state of charge. Firstly, the rate of change of temperature is no longer proportional to the heat input. In contrast, water of 80 °C contains twice as much heat as water of 40 °C if the reference is water at 0.01°C (in the range 0.01 °C to 99 °C). No such statements can be made for PCM materials. So the relation between rate of change of temperature and heat input/output is intrinsically nonlinear. Secondly, PCM's have the tendency to hysteresis, meaning that the nonlinear relation between rate of change of temperature and heat exchange is different for a heating process and a cooling process. In particular there is a problem with respect to state of charge (SoC) estimation.

The article at http://repositorio.educacionsuperior.gob.ec/bitstream/28000/1376/1/T-SENESCYT-00527.pdf proposes to make a complex model, which is tuned to a single device. In any practical case, this would take many man hours to tune and calibrate such models to every new device.

Measuring other physical parameters of the PCM material is proposed in http://sfera.sollab.eu/downloads/JRA/WP15/SFERA_R15.4_New_measurement_systems_ of_latent_HSM.pdf. Here is proposed the measure the electric conductivity of the PCM. This works well for anorganic PCM materials, like nitrate salts, but these are very specific PCM materials.

State of charge can be measured directly. Hence, no models are needed to quantify changes in heat when no observations are made, nor the dynamics and history of the system are taken into account.The current state of the art methods use the heat capacity as the proportionality factor between heat and temperature differences. This is not useful for a buffer having a PCM material, since the temperature does hardly change with changing heat input at the phase change point. For many other systems, the heat losses are proportional to the temperature difference with the outside world. This relation may change in time (if isolation degenerate for example). It would be a complex task to model this and regularly update these models.

Nonparametric approaches are proposed in "Heat and cold storage with PCM", from Mehling and Cabeza, Springer, 2008. In this book is explained that the relation between heat and temperature change is highly nonlinear and depends on the shape and size of the container and of the constitution of the heat storage material. They propose to empirically measure this relation. In a validation, the values closest to the observed ones can be used.

Energy measurements are described in
[http://repositorio.educacionsuperior.gob.ec/bitstream/28000/1376/1/T-SENESCYT-00527.pdf]. Here is proposed to make a complex model, which is tuned to a single device. In any practical case, this would take a considerable effort to tune and calibrate such models to every new device.

Measuring other physical parameters of the PCM material are proposed in [http://sfera.sollab.eu/downloads/JRA/WP15/SFERA_R15.4_New_measurement_systems _of_latent_HSM.pdfJ. Here it is proposed to measure the electric conductivity of the PCM. This works well for anorganic PCM materials, like nitrate salts, but does not apply to other common PCM materials.

### Aim/Purpose

An aim of this invention is to provide an automated method to estimate or measure the energy content of energy storage media, like heat or cold buffers, using for example single phase or PCM materials, or batteries, or similar energy storage media.

In one aspect the present invention provides a system and a method that can be applied to a broad range of materials, a broad range of geometries. In another aspect the present invention provides a system and a method that will automatically learn the relation between the state of the energy storage medium and the energy capacity such as heat energy (hot or cold) capacity. In addition, it is able to learn if insulation properties like thermal conductivity of the insulation, or changes in time (for example due to degradation).

### Summary of the Invention

Embodiments of the present, invention provide a system and method, which can estimate the state of charge of an energy storage device such as an electrical (e.g. battery) or thermal storage device of which one example is a PCM tank. Embodiments of the present, invention can receive signals from a single, cheap state sensor such as a temperature sensor in a thermal energy storage medium such as one using PCM. Embodiments of the present invention provide a system and method which can estimate the state of charge of an energy storage device by making use of a model of the storage device such as of the PCM tank and of the history of the output of the state sensor such as the temperature history of the storage device, e.g. a PCM tank. One of the main problems addressed by embodiments of the present invention with PCM materials is that the temperature is no longer a simple measure of the heat content and more complex models are required.

A second problem is that for thermal storage devices the heat capacity differs not only from one type of material to another, but is also in function of the geometry of the storage device. It is a complicated and time consuming task to take this geometry and manufacturing details into account in a model. Nevertheless, these models are indispensable if one wants to estimate the state of charge of a buffer, based on a few sensors.

A third problem of thermal storage devices is that the insulation properties may change slowly over time and that the constitution of the storage medium may change. For example a homogeneous PCM material will become less homogeneous when it is often used. The longer carbon chains will prefer to stay in the solid phase, while the shorter chains will preferably stay in the liquid phase.

If energy storage devices such as heat storage devices are used for example in a smart grid context, the energy content needs to be known in order to estimate the flexibility of the system. Therefore a model is needed. Embodiments of the present invention provide a system and method that can automatically identify the relation between energy capacity and the state of the energy storage device, e.g. between heat capacity and the state of the heat storage device. This relation can be used to estimate the energy content, e.g. the heat content. Instead of measuring every energy storage device such as heat storage device to define its properties, embodiments of the present invention provide automatic machine learning methods to solve this problem. Such methods can identify the energy capacity, such as the heat capacity of a broad range of energy storage systems, including PCMs, based on the history of the state sensor output, e.g. the temperature history of the heat storage device. In particular use is made of the rate-of-change of the output of the sate sensor such as the rate of change of temperature to estimate the state of charge.

For complex systems, like heat storage devices using PCM, a calibration method is proposed which takes the nonlinear relations and hysteresis explicitly into account. Even for simple systems, the features of the buffer installation need to be taken into account. This allows use of a single state sensor such as a temperature sensor to characterize the state of charge of an energy storage device such as a PCM tank. This is possible if the history of the output of the state sensor such as the temperature history is used in the calibration procedure.

Embodiments of the present invention make use of information which is readily available, to make predictions of the energy content, e.g. heat content, i.e. State of Charge. Embodiments of the present invention can be used for complex storage systems, like thermal storage devices using PCM, or storage systems with complex geometries/ insulation materials. Hence embodiments of the present invention enable prediction of the state of charge of complex storage systems such as complex heat storage systems, like those using PCM materials.

The energy capacity such as the heat capacity is a parameter and it is best used in a model which allows integration of past outputs of the state sensor such as the historical values of temperatures for charge estimation. Embodiments of the present invention provide a system and method that can be applied to a broad range of storage systems such as heat storage systems, since it is applied with a model selection criterion, which automatically uses that model which is the most appropriate at that time for that system.

The models used are able to identify changes in the state of charge, even if the output of the state sensor, e.g. the temperature does not change or hardly changes. This is for example the case in PCMs at the phase change point. If the energy capacity is dependent upon the output of the state sensor, e.g. if the heat capacity is dependent on the temperature, the models can identify this relationship and use it to predict the state of charge more accurately.

A first embodiment of the present invention provides a method comprising the following steps:
The first step is to use historical values of system sensors (e.g. temperature in a thermal storage device) and not just the last measured value. It is preferred if it is not necessary to construct a model for each specific storage system so that it is not necessary to repeat model creation for every new device. Preferably, even if there are changes with time, redesign of the model does not need to be repeated regularly.

A second step is to use a set of models designed to cover most applications and then to automatically select the most appropriate model.

Tools can be applied from information theory, like minimum description length. This allows automatic modelling of a broad range of energy storage devices with regular updates. As the models have been selected the use of these models can be done by less qualified persons than would be required if the models must be designed *de novo.* The models can be selected based on the target application, e.g. measuring the heat content of storage systems, especially for PCM materials (e.g. using PCMs in heat exchangers or heat pumps, etc.) and estimating the state of charge of such systems. Hence estimating the state of charge of heat storage systems can include estimating the state of charge of subsystems having PCM materials.

The model selection step comprises selecting different model structures with varying complexity. To select a model a trade-off can be made between complexity and accuracy or precision. It is preferred to reduce complexity by selecting the number of model parameters. Preferably there are at least three models, e.g. four different types of models. For each type there can be more than one example of the type that is used.

Embodiments of the present invention are defined further in the appended claims which include:
An energy storage device, comprising:
a controller for predicting a state of charge of the energy storage device, the controller having
means to receive measurements of a state sensor of the energy storage device means for loading of a set of models for an energy capacity of the energy storage device, means for matching each of these models or a machine learning method to historical data of measurements of a state sensor of the energy storage device
means for applying a model selection criterion to identify the most appropriate model, and means for predicting an energy content of the energy storage device for a specific time based on the selected model,
a computer program product for executing any of the methods of the present invention when executed on a processing engine,
a non-transitory signal storage device storing the computer program product.

In another aspect the present invention provides a computer based method for controlling a distributed heating or cooling network providing heat energy to buildings, the distributed heating network comprising at least one heating or cooling source and at least two different thermal storage devices, each of the at least two different thermal storage devices having a state sensor, the method comprising:
loading a set of at least three models for the energy capacity of a thermal storage device,
matching each of these models to historical data of measurements of the state sensor of each of at least two different thermal storage devices;
applying a model selection criterion to identify the most appropriate model of the at least three models for each of the at least two different thermal storage devices, predicting an energy content of each of the at least two different thermal storage devices for a specific time based on the selected model, and
steering the distributed heating network with heat energy from one or both of the at least two different storage devices and/or from the heating source using the predicting of the energy content of each of the at least two different thermal storage devices.

In another aspect the present invention provides a computer based method for controlling an electricity distribution network providing electrical energy for charging at least two different energy storage devices selected from a thermal storage device of a heat network and an electrical storage device, each of the at least two different storage devices having a state sensor, the method comprising:
loading a set of at least three models for the energy capacity of a storage device,
matching each of these models to historical data of measurements of the state sensor of each of at least two different energy storage devices;
applying a model selection criterion to identify the most appropriate model of the at least three models for each of the at least two different energy storage devices, predicting an energy content of each of the at least two different energy storage devices for a specific time based on the selected model, and
Steering the electricity distributed network to provide electrical energy to one or both of the at least two different energy devices dependent upon the predicting of the energy content of each of the at least two different energy storage devices.

In another aspect the present invention provides a computer based system for controlling a distributed heating or cooling network providing heat energy to buildings, the distributed heating network comprising at least one heating or cooling source and at least two different thermal storage devices, each of the at least two different thermal storage devices having a state sensor, the system comprising:
means for loading a set of at least three models for the energy capacity of a thermal storage device,
means for matching each of these models to historical data of measurements of the state sensor of each of at least two different thermal storage devices;
means for applying a model selection criterion to identify the most appropriate model of the at least three models for each of the at least two different thermal storage devices,
means for predicting an energy content of each of the at least two different thermal storage devices for a specific time based on the selected model, and
means for steering the distributed heating network with heat energy from one or both of the at least two different storage devices and/or from the heating source using the predicting of the energy content of each of the at least two different thermal storage devices.

In another aspect the present invention provides a computer based system for controlling an electricity distribution network providing electrical energy for charging at least two different energy storage devices selected from a thermal storage device of a heat network and an electrical storage device, each of the at least two different storage devices having a state sensor, the system comprising:
means for loading a set of at least three models for the energy capacity of a storage device,
means for matching each of these models to historical data of measurements of the state sensor of each of at least two different energy storage devices;
means for applying a model selection criterion to identify the most appropriate model of the at least three models for each of the at least two different energy storage devices,
means for predicting an energy content of each of the at least two different energy storage devices for a specific time based on the selected model, and
means for steering the electricity distributed network to provide electrical energy to one or both of the at least two different energy devices dependent upon the predicting of the energy content of each of the at least two different energy storage devices.

In another aspect the present invention provides a plurality of energy storage devices adapted to be coupled into a thermal or electrical distribution network, each energy storage device comprising:
a controller for predicting a state of charge of the energy storage device, the controller having
means to receive measurements of a state sensor of the energy storage device,
means for loading a set of at least three models for an energy capacity of the energy storage device, the at least three models being the same for each energy storage device,
means for matching each of these models to historical data of measurements of the state sensor of the energy storage device,
means for applying a model selection criterion to identify the most appropriate model, and
means for predicting an energy content of the energy storage device for a specific time based on the selected model, .

### Description of the preferred embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

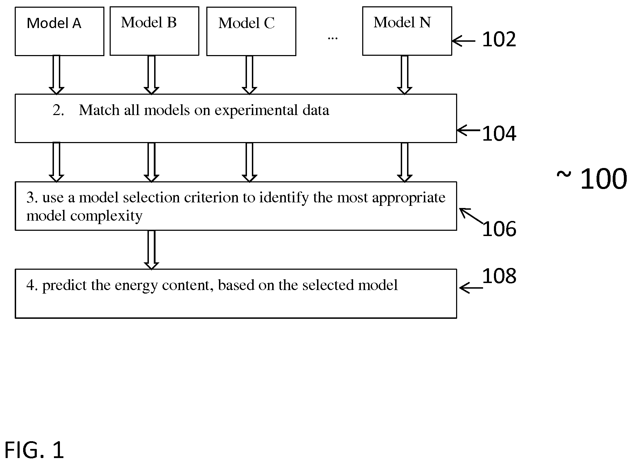

Figure 1 shows a method flow 100 of an embodiment of the present invention. One aim of the method is to predict in step 108 the energy content of a storage system such as the heat content of a heat storage system. First a set of models A-N for the energy capacity such as the electrical energy or the heat capacity are selected in step 102. Preferably there are at least three models, e.g. four different types of models. For each type there can be more than one example of the type that is used. Each of these models is then matched to or regressed to experimental data of the system in step 104. This can be done based on one or more specific models or on machine learning methods. A model selection criterion is used to identify the most appropriate model in step 106. The energy content such as the electrical energy or heat content is predicted, e.g. at a specific time based on this model in step 108.

More complex models will in general match better to the data, since more parameters can be adjusted. For some systems, this complexity is intrinsically present in the system, while for others this additional complexity can only be used to follow random variation, like measurement noise. When this set is used to predict the energy content of a storage device, the access model complexity will result in less precise predictions. Model selection criteria, based on information theory, can be used to identify that model which best balance accuracy and precision.

The method can be fully automated to identify the energy content of a storage device such as the heat capacity of a thermal storage device or system and thus the energy content such as the electrical energy or heat content of a large range of storage devices.

In a method according to an embodiment of the present invention, the storage device or system is first monitored solely by one or a few state sensors which capture a relevant physical property of the device or system. For example for a thermal storage device one or more temperature sensors can be appropriate. Historical values are generated and stored for later use. For example, the temperature history is logged and this information is stored in a feature matrix, which does not only take the current temperature into account, but also for example, the rate-of-change of temperature and for example the historical values of temperature and rate of change of temperature. In addition, these observations are used to tune a set of possible models. This makes the method less vulnerable to practical details such as size and shape of the container, constitution of the PCM material. More generally for an energy storage device historical values of state sensor outputs are measured and stored for later use. For example, the historical values are logged and this information is stored in a feature matrix, which does not only take the current sensor output into account, but also for example, the rate-of-change of sensor output and for example the historical values of sensor output and rate of change of the output. These observations can be used to tune a set of possible models.

Next, the energy capacity such as a heat capacity is determined. This is done by
- a set of models and machine learning methods
- a method, which can automatically estimate the model parameters,
- a method, which can identify the most appropriate model,
- a method that can estimate the energy content of the system.

Model selection can be fully automated. Preferably, at least one of the models is specifically designed to characterize a material important for the storing of energy. For thermal storage devices this could be PCM materials. First the PCM material is calibrated, because the nonlinear relations and hysteresis behaviour of temperature versus heat content may be dependent on the topology of the tank, on the PCM material, on the position of the sensor, on the amount of heat exchange, etc. Next, a calibration model is used, which can incorporate nonlinear relations such as hysteresis. Finally, a combination of dynamic measurements (not only the current state sensor output such as temperature, but also the state sensor outputs in the recent past such as temperatures in the recent past) is used as input in the calibration model. The output is an estimate of the state of charge of energy storage device, e.g. the PCM material. For example the PCM materials can be embedded in heat exchangers and heat pumps. In these systems it is important to monitor the state of charge of the PCM material continuously.

By selection of a resourceful set of models the method can be applied to a broad range of containers, with varying sizes and shapes and to a broad range of materials. For example for thermal storage devices this can range from a standard constitution, like water to PCM. For example, this method can be applied in heat storage units with or without PCM materials. It can be applied to a broad range of devices such as heat pumps, heat exchangers, electric vehicles, airplanes, heat storage units, etc. If the constitution of the material changes in time or if the container's properties changes for example by degradation of the insulation, the method is able to update itself and propose adapted models to estimate the heat capacity and state of charge.

### Embodiment: On the State-of-Charge Estimation of Phase Change Material Tanks

The present invention relates to energy storage devices, how to select a suitable model for them e.g. based on state sensor outputs. Embodiments of the present invention will be described by reference to thermal storage devices. The skilled person will appreciate that the embodiments describing thermal storage devices also disclose the same methods and systems applied to energy storage devices in general such as electrical energy storage devices of which a battery is one example. Such batteries can be used in battery farms to store electricity generated by solar networks during the day and to supply that energy at night.

This embodiment relates to a method to characterize the energy content of heat storage media, like PCM materials or water of water tanks. Firstly, experimental data are qualitatively analysed. This shows that the heat capacity is a nonlinear function of temperature and the heat capacity differs during a loading and unloading cycles for PCM materials. To model these effects, two models are tested: a polynomial model, able to capture the static nonlinear relation and a hysteresis model, able to capture the strange dynamics of phase change materials. Both are compared to a simple linear model with constant heat capacity and a machine learning method, which is able to capture a broad range of relations to estimate the heat capacity. Next, these models are matched on the experimental data. At this stage, it is still unclear which model should be used to estimate the heat content, since more complex models always fit better. A model selection criterion is used to identify the most appropriate model. Finally, the method is validated on a set of new experiments on the same system. The method is tested on two types of storage systems, a PCM tank and a water tank. For the PCM tank, the hysteresis model performs best. So a modelled assisted energy estimate of phase change materials is proposed. If the model used is able to capture the dynamics well, errors are typically smaller than 10 % in these experiments. For the water tank, the polynomial model performs best.

PCM can be used to store heat or regulate temperatures inside buildings. The composition is chosen so that a phase transition occurs in the desired temperature range. One advantage is that the latent heat associated with the phase change increases the heat capacity of the storage device considerably. But this also causes some complications, compared to simple heat storage media, like water. In these media, a simple, cheap, yet accurate temperature sensor can be used as measure for the heat content. It is much more complicated to determine the state-of-charge of a PCM tank. Regarding PCM materials, four values are relevant:
- Phase change temperature
- Phase change enthalpy
- Heat capacity in the solid phase
- Heat capacity in the liquid phase.

Most PCM are not pure materials and therefore instead of a melting temperature, there is a melting range. Secondly, it is, in general, possible to calculate the performance of a PCM - object, like balls or bags filled with PCM, from material property data and the geometry of the PCM object. Calculations however can be complicated and time consuming and sometimes they are not possible when material property data are not available. Therefore, it is often better to measure the properties of the PCM tank directly, e.g. the stored heat as function of the temperature. It avoids the definition of a single melting temperature, a constant heat capacity, that might not exist, as well as the separation between sensible heat and latent heat.

Still, several physical effects have to be taken into account. Sub-cooling leads to different results for heating and cooling, i.e. hysteresis. Sub-cooling is restricted to the temperature range where solidification is started. Sub-cooling depends on many things, including the sample size. Sub-cooling does not always play a major role.

Since the melting and solidification processes are spread over a temperature range, the heat capacity changes with temperature. This nonlinear relation is analysed and modelled.

Hysteresis occurs when latent heat is released too slowly on cooling, e.g. because the crystal lattice forms very slowly or because diffusion processes are necessary to homogenise the tank. The temperature then drops below the melting temperature. Upon melting, a similar effect is usually not observed, because during melting, the kinetic effects proceed much faster. So the heat capacity may seem different for heating and cooling processes.

The stored heat can be determined as function in a given temperature interval for heating as well as for cooling. From such information, the heat stored in any arbitrary temperature interval can be calculated. This can for example be done using the temperature history.

In addition parametrized models can be used to describe the heat capacity as function of temperature and this for heating and for cooling processes. Such parameterized models have better statistical properties, since measurement noise is averaged out better.

### Experimental set-up

An experimental system was made to deliver thermal powers up to 400 kW in a working temperature range between 6 °C and 88 °C. Three storage vessels store water at high, medium and low temperature levels. The desired temperature can be obtained by mixing the water from these vessels before delivery. A gas-fired boiler is used for the hot water preparation and a dry-cooler for the low-temperature vessel. The different experimental setups are hydraulically separated from the primary loop as a safety measure. All valves and pumps are operated by a NI LabVIEW interface which allows imposing specific loading and unloading sequences. Data is logged in a SQL database with a minimal sampling time of 200 ms. For the present experiments a sampling time of 1 minute was used. The PCM vessel set-up is also equipped by a cross-flow mechanism, allowing to rapidly invert the flow direction through the vessel, and by-pass section which can be used to preheat or cool the HTF before starting the HTF circulation.

In total 9 PT-100 (3 wire, class B, accuracy +/-0.55°C at 50 °C) temperature sensors were used to monitor the PCM temperature. The measuring points were located at three different depths (100, 200 and 300 mm) at three points along the central axis of the vessel, in between fins. Also the temperature of the HTF before and after the vessel is monitored by PT-100 (3 wire, class 1/10 DIN) temperature sensors along with the HTF flow rate.

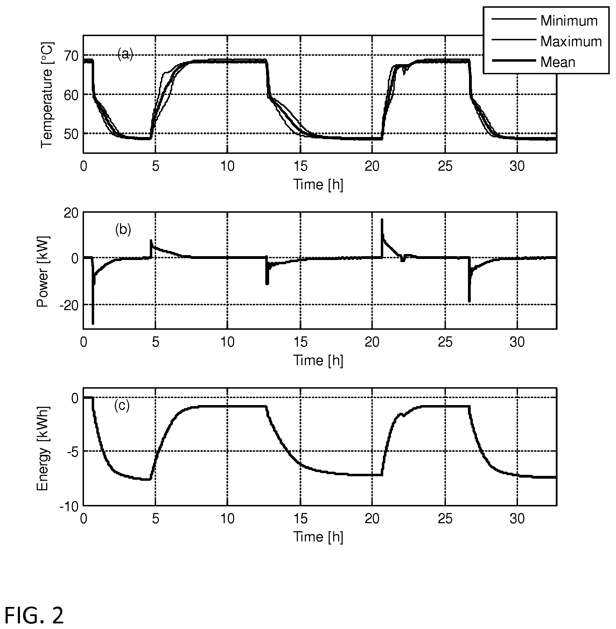

Figure 2 show (a) temperature in the tank; (b) Power exchanged with tank; and (c) Energy content of tank.

### Problem Statement

The aim of this embodiment is to estimate the state of charge, based only on temperature measurements inside the PCM tank. The simplest model for the relation between energy content and temperature is $Q = C * Δ T$

Where *Q* is the heat content [kWh], *C* the heat capacity [KWh/K] and Δ*T* the temperature change [K]. Derived with respect to time this becomes: $P = C * dT / dt$

Where *P* is the power [kW] and *dT*/*dt* the temperature rate of change [K/h]. For simple materials, the heat capacity is almost constant over a large range of temperatures, but for PCM materials, the phase changes over the operational temperature range. So the heat capacity does not only consist of the sensible heat, but also of latent heat. In addition, most commercial PCM's do not consists of a pure substance, but are a mixture of substances, each with their own melting point, sensible and latent heat. As a result, it has become a complex task to derive the heat capacity from basic thermodynamics.

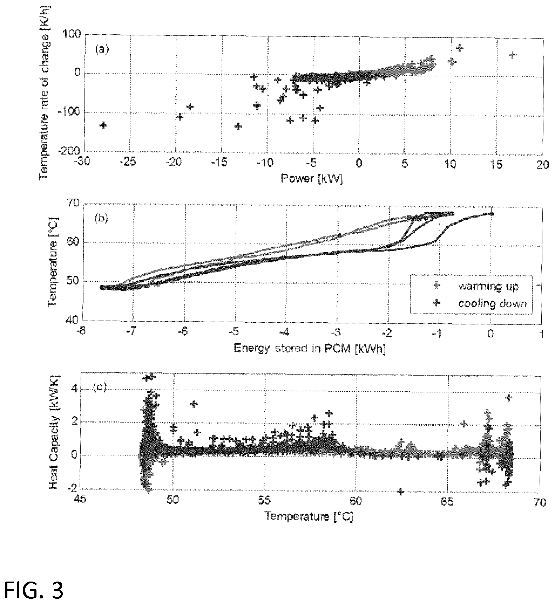

Figure 3 (a) shows a visualization of the heat capacity as the relation between power and temperature rate of change; (b) shows a visualization of hysteresis; and (c) shows an empirical estimation of the heat capacity during a heating and cooling process. Figure 3 (a) shows the power exchange with the PCM tank as function of the temperature rate of change. If the PCM material where a simple pure substance without phase changes, all points where scattered around a straight line, with a slope equal to the heat capacity. Here it can be observed that:
(i) for small temperature changes, the heat capacity seems to follow a bananashaped curve;
(ii) for cooling, the heat capacity is scattered and it is difficult to identify any static relation.

Figure 3(b) shows the temperature as function of the energy content. If the heat capacity where constant, this relation where again a straight line, with a slope equal to the heat capacity. This figure shows that hysteresis is present: when the PCM is heated up, the temperature increases proportional with the energy content, but when cooled down, the temperature decreases vary rapidly in a first stage and decreases much slower afterwards. Hysteresis is typically a dynamic property, where the material 'remembers' its past state. So a model for the heat capacity should preferentially take the dynamics of the system into account as well.

Equation 2 can be used to estimate the heat capacity at every instance. Figure 3 (c) shows the estimated heat capacity explicitly as function of the temperature. For high and low temperatures, the system is in steady state and the variation in heat capacity is not significant. The temperature rate of change is very low here. The variance on the heat capacity is inversely proportional to the fourth power of this rate, resulting in large uncertainties for the heat capacity (see paragraph on uncertainty below). For heating, the heat capacity is rather constant as function of temperature, for cooling down; the heat capacity is low for high temperatures (> 60 °C) and increases rapidly between 55 and 60 °C. This is due to the clotting process. Below 55 °C the heat capacity decreases, but remains relatively high. The nonlinear relation can thus be expressed in function of the temperature.

In conclusion, the dynamics of hysteresis are important and the heat capacity is a nonlinear function of the temperature. These two observations will be the basis for a model.

### 1. Models and estimation method

### Evolution equation and initial value

Starting from equation (2) the temperature evolution is calculated. This first order differential equation can be integrated if an initial condition *T*₀ is given. The initial condition may vary with the value(s) of the heat capacity and for that reason; it is also estimated in the procedure. To integrate the model, a simple Euler-integration scheme is used as an example.

### Linear het capacity model

Three types of models are used. Firstly, for a reference case a linear model is used, where the heat capacity is a constant *α* , $C = α$

In fact, the latent heat in the PCM tank is ignored and it is assumed that the heat content is proportional and independent of temperature. The parameter needs to be estimated together with the initial condition. So overall *θ* = [*T*₀,*α*] are the parameters that need to be estimated. More complex models can be compared to this simplest model.

### Static nonlinear heat capacity model

A second model takes the nonlinearities into account, but the dynamics are not modelled. So only the static nonlinearities are taken into account $C \left(T\right) = α + βT + {γT}^{2} + …$

With [*T*₀,*α,β,γ*,..*.*] parameters to be estimated.

### Hysteresis heat capacity model

The third model takes hysteresis into account. A Preisach-hysteresis model was implemented see F. Preisach, Über die magnetische Nachwirkung. Zeitschrift für Physik, 94:277-302, 1935.

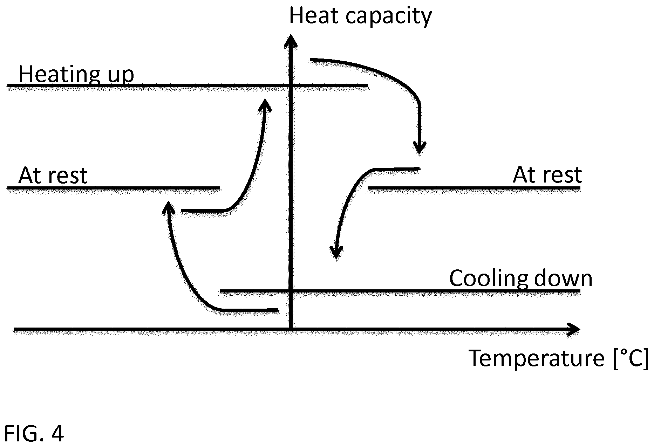

The Preisach hysteresis model works as follows (see Figure 4)
(i) Suppose that the method starts in a situation of high temperatures (70 °C) in a steady state. Now the system is at rest.
(ii) If the temperature rate of change drops below a threshold, the cooling down stage starts and the system remains in this stage, until
(iii) The temperature rate of change drops below a second threshold. The system is at rest again.
(iv) If the temperature rate of change increases above a t, the heating stage starts and continues until
(v) The first threshold is reached. The system is now again in situation (i).
(vi) This loop is repeated.

The rest stage is important for two reasons. Firstly the uncertainty on the heat capacity is large and if this stage would be incorporated in the heating and/or cooling stage, the parameters of these stages would be influenced significantly. Secondly, the system is most of the time in this rest situation, so any search algorithm, used to identify the model parameters, would pay much more attention to this rest situation than the transients. An alternative could consist of defining a weighting, which would give a lower weight to the rest situation, but it is difficult to deal with this in an objective manner of weighing the data.

Quantitatively, the system is described by two state parameters, i.e. the temperature and the state of the system. Firstly, the state is update with the following scheme
(i) If system is 'at rest' and temperature change $dT / dt < {ε}_{1}$ The new state is 'cooling down.
(ii) If the system is 'at rest' and temperature change $dT / dt > {ε}_{2}$ The new state is 'warming up'.
(iii) If the system is not 'at rest', but ${ε}_{2} < dT / dt < {ε}_{1}$ The new state is 'at rest'.

Once the state is defined, the appropriate model is called
(i) 'At rest' $C = α$
(ii) While 'warming up' $C = β + γT + {μT}^{2} + …$
(iii) While 'cooling down' $C = δ + ηT + {λT}^{2} + …$

The parameters to be estimated are *θ=*[*T*₀,*ε*₁,*ε*₂,*α,β,γ,µ,...,δ,η,λ,...*].

### Machine learning model

Machine learning techniques are a group of statistical models, which aim at learning a relation between a set of input parameters and output parameters. (Machine learning is the subfield of computer science that "gives computers the ability to learn without being explicitly programmed" (Arthur Samuel, 1959). Machine learning is closely related to (and often overlaps with) computational statistics, which also focuses in prediction-making through the use of computers [ https://en.wikipedia.org/wiki/Machine_learning, Phil Simon (March 18, 2013). Too Big to Ignore: The Business Case for Big Data. Wiley. p. 89. ISBN 978-1-118-63817-0.].

Most of these methods do not assume particular information about the system to be modelled. Their main advantage is that they can be applied to a broad range of problems and need little expert inference. All techniques described are based on models created by an expert. For every new problem, new models need to be constructed. However, in many applications this expert knowledge makes it possible to tune a model to a particular problem and in our experience, mostly such expert models are able to perform better than machine learning methods.

A simple machine learning technique is used, called k-nearest neighbours. For the present problem, the input is the temperature of the system and the temperature's rate of change; the output is the heat capacity. From a training set, a matrix is constructed with input and output parameters. For each new sample, the *k* samples which are closest to this sample are selected and the mean heat capacity of these *k* samples is used. As a measure for distance, the 2-norm is used. It is easily possible to give each of the *k* neighbours a weight inversely proportional to the distance from the sample, but in the present case this did not improve the heat capacity estimation. Since the temperature rate-of-change (see paragraph on uncertainty) is very sensitive to measurement noise, this rate of change is preferably averaged by an n-point moving average filter such as a four point moving average filter or similar filter. For the same reason, a high value for the number of neighbours taken into account has been selected. This method gives the best results if the heat capacity is estimated from the nearest 400 neighbours. Of course this number depends on the experiment, the quality of the sensors; the sampling rate has to be tuned for every new experiment. Besides this parameter, no parameters are tuned and for that reason, this method is considered as a non-parametric method.

### Parameter estimation method

To estimate the parameters, a Markov-Chain Monte-Carlo method can be implemented [http://www.mcmchandbook.net/HandbookChapter1.pdf]. In Monte Carlo methods, the parameter space is randomly sampled, for each sample, the model is run forward and the cost function is calculated. Finally, one can select the parameter set with the best cost function or continue with the parameter distribution. A disadvantage of this method is that a lot of calculation time is spent in obscure corners of the parameter space, which are most unlikely to contain good parameter values. Markov-Chain Monte-Carlo methods uses also random perturbations of the parameters, but the selection is pushed slightly towards regions with higher probability to contain good parameter values and this without becoming too greedy and ending up in a local minimum. Many alternative methods exist, like genetic algorithms [Levenberg, Kenneth (1944). "A Method for the Solution of Certain Non-Linear Problems in Least Squares". Quarterly of Applied Mathematics. 2: 164-168. Marquardt, Donald (1963) "An Algorithm for Least-Squares Estimation of Nonlinear Parameters". SIAM Journal on Applied Mathematics. 11 (2): 431-441. doi:10.1137/0111030.] and probably all these methods will work well and result in identical conclusions. System identification techniques, like the Levenberg-Marquardt method [Levenberg, Kenneth (1944). "A Method for the Solution of Certain Non-Linear Problems in Least Squares". Quarterly of Applied Mathematics. 2: 164-168; Marquardt, Donald (1963). "An Algorithm for Least-Squares Estimation of Nonlinear Parameters". SIAM Journal on Applied Mathematics. 11 (2): 431-441. doi:10.1137/0111030] need to invert the model by means of its Jacobian. If one wants to check quickly if a model is suited for a dataset, this is a time consuming task. In addition, for the hysteresis model, which contains if-statements, the derivative does not exist, which makes it simply impossible to use these methods. These disadvantages are not found for Markov-Chain Monte-Carlo methods, which only need a forward integration of the model. The main disadvantage is that the parameter estimation itself takes more time. In the examples used in this paper, the parameters where found in less than one hour. This is a reasonable time; especially compared to the experiments, which took about a day.

The Markov-Chain Monte-Carlo algorithm consists of or comprises the following steps
(i) The model parameters are initialized and are stored in a vector *θ*₀. These parameters can be initialized with positive random values.
(ii) The initial cost function *K*₀ is set equal to infinite.
(iii) The parameters are perturbed with a normally distributed random number and are temporarily stored in *θ*. The mean of this distribution is evidently zero, the standard deviation was set equal to a value such as percentage (e.g. 5%) of the parameter value.
(iv) Constraints on the parameters were checked to exclude negative heat capacities. If a perturbed parameter set would lead to negative heat capacities, step (iii) is repeated until the constraints are met.
(v) The model is integrated.
(vi) The new cost function is calculated. The one-norm as cost function can be used: $K = {\sum }_{t = 1}^{N} \left|{T}_{measured}\left(t\right)-{T}_{model}\left(t\right)\right|$

With *K* the cost function, *t* the sample number, *N* the number of samples, *T*_{measured} the measured temperature and *T*_{model} the modelled temperature.
(vii) Accept or reject the new parameter values. If a random sample *r* , from a uniform distribution between zero and one is below the ratio *K* / *K*₀,
   a. The parameter vector *θ*₀ is overwritten with *θ*;
   b. The initial cost function *K*₀ is overwritten with *K* ;
(viii) The procedure, starting at (iii) is repeated *M* times.

### 2. Results of the parameter estimation on a PCM material

The results of the parameters estimation and how well the models are able to describe the measured variation in temperatures, the nonlinear heat capacity, the dynamics and the influence of temperature on the heat capacity will be described.

The mean error for the linear model in the measured and modelled temperature of this simple model was 0.75 °C or only a few percentages. So this reference model is well able to follow the variations in temperature. The largest errors were made in the beginning, which illustrates the importance of estimating the initial value well. As this model is linear, the results can be interpreted as a best linear approximation of the nonlinearities present in the data. The linear model was not able to follow the dynamics of the system very well. With respect to the heat capacity as function of the temperature, the uncertainties on the observed heat capacities were ordered in 30 groups, based on the temperature and a 10 % uncertainty bound. The uncertainty is several orders of magnitude larger than the internal variation. The only conclusion that can be drawn is that the model is well within the uncertainty.

The static nonlinear model's is limited to a second order model. This model can follow the variation in temperature even closer, with an average error of only 0.61 °C. Both models are good, but this one is still 20 % better. This is partly due to the smaller errors made in the first stages of the experiment. The static nonlinearity is better described with this model, but a large scatter, especially for the cooling process could not be covered. The nonlinearities for small power perturbations are well described. Surprisingly, the best fit, does not result in an increased heat capacity around 55-60 °C but rather in the opposite. Of course, any of these models falls well within the uncertainty, so one cannot prefer one model over the others.

For the model with Preisach hysteresis, for heating, a first order model was used and for cooling a second order model was used. The model complexity is left low on purpose: higher order models will fit better on the data, but their extrapolation characteristics will be worse. The additional parameters will result smaller model errors, but also in a smaller precision. It has been found that accuracy is more important when energy content has to be predicted. This model is able to follow the temperature variations well, but the average error is larger than for the static nonlinear model (0.73 °C, compared to 0.61 °C for the static nonlinear model). However, the scattered values for the cooling process are covered for the first time and the nonlinear behaviour for small power is described. The dynamic variation is well described too and the temperature dependence is seems reasonable with a peak at 57 °C and lower values for higher temperatures.

With reference to the machine learning model this model performs worse than all other models. The other models are all tuned explicitly on the measurements and all parameters are tuned for this task only. The nearest neighbours approaches sought those temperatures and temperature rate-of-changes that resembles closelya the current situation and averaged these out. Only if *k* was chosen equal to one, the measurements (which are here also the training data) could be followed perfectly. However, no noise filtering would have been applied and all other results would have been far worse.

The machine learning model is not able to identify the histeresis. The heat capacity as function of the temperature shows a small dependency, comparable with the polynomial model.

In conclusion, all four models are well able to describe the temperature variations. So based on this criterion, we cannot find good reason to opt for more complex nonlinear models. If we look specifically at the nonlinear relation between power and temperature change

### Model Selection for the PCM material

Here a method is described to select the most appropriate model. One could naively select that model with the smallest mismatch on the measurements. This would not always be a good choice. Models with many (tuned) parameters will match better on the data than simple models, since they have more 'degrees of freedom' to tune their variation with respect to the measured data. If such models are to be used for extrapolation purposes, they will, in general perform worse, since part of their flexibility is no longer used to follow the intrinsic variability, but is used to follow random measurement noise. When extrapolated, this will result in widely scattered forecasts. On the other hand, it is not a good idea to select the simplest model, because it might simply not be able to follow variations present in the data (like hysteresis in this case).

Model selection criteria are designed to objectify the choice of a good model complexity. Two types of model selection criteria are compared. Akaike's information criteria supposes that the experiment is redone. [Akaike, Hirotugu. "A new look at the statistical model identification." IEEE transactions on automatic control 19.6 (1974): 716-723.]. The intrinsic model variability will be reproduced, while the measurement noise will be resampled (and will thus be different). Akaike's method asks which model from a given model set is to be selected in order to predict the outcome of this new experiment the best (lowest 2-norm cost function). Rassinen [Rissanen, Jorma. "Modeling by shortest data description." Automatica 14.5 (1978): 465-471] and Scharz [Schwarz, Gideon. "Estimating the dimension of a model." The annals of statistics 6.2 (1978): 461-464] provide rules to select the model which has the highest probability to be the 'true' model in the model set. In general their selection criteria have the tendency to select simpler models then Akaike's criterion.

A property of both model selection criteria is that they only depend on the residual cost function (2-norm), the number of parameters and the number of observations. This makes these model selection criteria independent of the (nonlinear) dependency on the parameters. Both classes of selection criteria assume that the number of parameters is negligible compared to the number of observations. In De Ridder et al. . [De Ridder, F., Pintelon, R., Schoukens, J., & Gillikin, D. P. (2005). Modified AIC and MDL model selection criteria for short data records. IEEE Transactions on Instrumentation and Measurement, 54(1), 144-150.] both criteria are adapted, so that the results are unbiased in the case were the number of observations is not much larger than the number of parameters. We will use the refined rules of Rasinen and Schwartz here. Their criterion is often called minimum description length or BIC. This criterion is calculated as follows $MDL = \frac{K}{N} exp \left[\frac{ln \left(N\right) \left({n}_{θ}+2\right)}{N - {n}_{θ} - 2}\right]$

With *K* the residual cost function, *N* the number of observations and *n_{θ}* the number off parameters.

Table 1 gives an overview of the results. The number of observations is always 1680. The number of parameters varied from 0 for the non-parametric machine learning method to 12 for the hysteresis model. The residual cost function varied between 2.200 and almost 10.000. This number is hard to interpret, since it scales with the number of observations. For that reason, the average standard deviation is calculated ( $s = \sqrt{K / N - {n}_{θ}}$; here it is assumed that no model errors are present and that the deviation between model and measurements are sampled from a normal distribution with zero mean and standard deviation s). All standard deviations are quite similar and varied between 1.05 °C and 2.2 °C. The corresponding MDL criteria varied between 1.16 and 5.05 °C². So for this experiment, the best model should be the hysteresis model.

**Table 1: overview of the maximum and integral error for the different models in the different validation experiments.**

| | *Number of parameters* | *Residual cost function [°C²]* | *Average standard deviation [°C]* | *Minimum description length criterion [°C²]* |
|---|---|---|---|---|
| *Linear model* | *2* | *3.2e3* | *1.3* | *1.66* |
| *Polynomial model* | *4* | *3.4e3* | *1.3* | *1.8* |
| *Hysteresis model* | *12* | *2.2e3* | *1.05* | *1.16* |
| *Machine learning* | *0* | *9.8e3* | *2.2* | *5.05* |

### Validation for a PCM material

In this paragraph, the models are validated on blind measurements. In the previous paragraph, the model parameters have been identified. How well each model can predict the energy content of the PCM tank is tested.

The aim is to check to what extent a tuned model is able to predict the energy content of a PCM tank. It is assumed that the model is matched beforehand on the same specific tank, but not in these exact same circumstances. For example, the temperatures varied between 48 and 68 °C in the estimation procedure, while they vary between 38 and 70 °C. In the estimation procedure, loading and unloading the PCM tank followed each other systematically in a cycles. In the validation, for example, heating occurred in two steps.

A too simple model will not able to follow the observations, the difference is due to socalled model errors. The model does simply not have enough features and this structural difference cannot be remedied. On the other hand, the absence of model errors does not mean that the model is 'good'. One can easily add too many processes and details. The parameters used in these redundant processes will be tuned on the measurement uncertainty. From a parameter estimation point of view, this will lead to a better fit, a lower cost. Nevertheless, if this model would be used on new data, where the parameters cannot be tuned, these redundant parameters will lead to larger model variability, to larger uncertainties, since the redundant processes do not mimic real underlying physics.

For this reason, the different models have been tested on some new measurements. Three types of measurements have been used: (i) the PCM tank is filled with heat; (ii) energy is extracted from a PCM tank; and (iii) a cycles is followed, where the tank is firstly filled and is emptied afterwards. In fact, one large experiment has been set-up and is cut in these three sub-experiments afterwards.

Note that in the validation tests, the model parameters are no longer matched on the measurements, but the models, which were tuned in the previous paragraph, are now used to forecast the energy content in these three cases.

The results for the linear model are that the linear model can quite well predict the energy content of the PCM tank at any moment during the heating process. Two metrics are used to characterize the error: the maximum error and the error at the end of the experiment (called the integral error). For the linear model, the maximum error coincides with the integral error. Both are 0.9 kWh, which is about 10 % of the energy content. An overview of the errors for all models is shown in Table 2.

For the unloading processes the linear model performs worse, with coinciding maximum and integral errors of 1.4 kW, which is nearly 25 %.

The linear model performed overall well. Although that the maximum error reaches 2.1 kWh, this error is reduced to only 0.5 kWh after the experiment. The reason is that the errors for loading and unloading the PCM tank are opposite and cancel each other out.

Overall the polynomial model performs worse in a validation test. For the loading process. the maximum error is 2.8 kWh, but at the end of the loading process, the error decreased to 1.3 kWh. For the unloading process both the maximum error and integral error are smaller, respectively 1.5 and 1.1 kWh. So relative errors are approximately 15-25 % in these processes. For the cycles the polynomial model systematically underestimates the energy content, resulting in a maximum error of 2.8 kWh and an integral error of 2.4 kWh. The polynomial model is apparently not able to cancel errors and performance in every test is worse than the simple linear model.

Overall, the hysteresis model performs well. The maximum and integral error for the loading process is 0.7 and 0.01 kWh. When temperature changes, a small instant error occur, but vanish after each heating cycles. Compared to the linear model, the integral error is almost an order of magnitude lower. For the unloading process, the errors are slightly worse (both 0.8 kWh), but still significantly better than for the two other models. For the cycles, both errors are 0.9 kW. Here the linear model performed better. In conclusion, the most stable model over the three validation experiments is the hysteresis model. Although the polynomial model had the smallest mismatch on the training data, it performed worse on the validation set. The simple linear model - which ignores the latent heat effects - performed reasonable under all conditions, but the model with hysteresis had the smallest overall maximum errors and satisfactory integral errors.

**Table 2: overview of the maximum and integral error for the different models in the different validation experiments.**

| *[kWh]* | *Maximum error* | | | *Integral error* | | |
|---|---|---|---|---|---|---|
| | *loading* | *unloading* | *Cycles* | *loading* | *unloading* | *cycles* |
| *Linear model* | *0.9* | *1.4* | *2.1* | *0.9* | *1.4* | ***0.5*** |
| *Polynomial model* | *2.8* | *1.5* | *2.8* | *1.3* | *1.1* | *2.4* |
| *Hysteresis model* | ***0.7*** | ***0.8*** | ***0.9*** | ***0.01*** | ***0.8*** | *0.9* |
| *Machine learning* | *5.9* | *2.5* | *5.9* | *5.2* | *0.95* | *4.3* |

### 3. Results of the parameter estimation on a water buffer

The same method was used for this experiment but applied it to a different material, i.e. for a water buffer. Details about this experimental set-up can be found in the article De Ridder F., Mathias Coomans. Grey-box model and identification procedure for domestic thermal storage vessels, Applied Thermal Engineering, 67.1, 147-158, 2014. In this water buffer 5 sensors are placed to measure temperature stratification inside the buffer. The buffer can be heated with a thermal resistor, of which the power is monitored. The inlet and outlet temperature and flow rate are measured to. The system can be heated by the resistor and depleted by tapping hot water. We have averaged out the temperature of the 5 sensors and use the average temperature in this experiment.

Firstly, the MCMC algorithm is used to automatically learn the behaviour of the system. The linear model is pretty well able to follow the temperature variations in the buffer. In this simple model the heat capacity is constant.

One might expect from theoretical considerations that the heat capacity of water in the temperature range between 20 and 70 °C does not change much and hence that this model should fit almost perfectly.

However, this model does not take stratification within into account, which is present in the buffer but is not visualized, due to the averaging over the different layers. In addition, the tank leaks heat, since the isolation is not perfect. This is not incorporated in the model. One may expect that heat losses are proportional to the temperature difference with the outside world. To mimic all these effects not present in the model, the parameters are slightly adjusted and some model errors remain present.

The second model used is a polynomial model which fits better than for the simple linear model. Although theoretical considerations may prefer the linear model, the polynomial model is more flexible and can explain more of the variations present in the data. By tuning the model on the measurements statistical methods can be used (minimization of the mismatch between both).

The machine learning method (nearest neighbours) is not tuned on the data. The only parameter which is used is the number of neighbours over which the heat capacity is averaged out. From a test on this training set, it appeared that averaging over all 168 observations works best. So in fact, the nearest neighbours approach resembles closely the linear model and average the variation in the heat capacity out over all samples and uses this single average as measure for the heat capacity of the system. Note however, that the nearest neighbours approach uses the numerical average, while the linear model selects that heat capacity which minimizes the one-norm between model and observations. Numerically both differ.

### Model Selection for a water buffer

In this embodiment the model selection criterion (MDL) are used to identify the most appropriate model. To recapitulate, it is not always a good idea to select the model with the best match on the data, since the most complex model fits better, but captures, besides the intrinsic variability, also random variations. When such a model is used for extrapolation purposes, it often performs worse than simpler models. The results of the model selection are shown in Table 3Table 3. The residual cost function is lowest for the hysteresis model, closely followed by the polynomial model. The fit for the linear model is significantly worse. This is also shown in the average standard deviation. If we take the model complexity into account the polynomial model outperforms, since it is much simpler than the hysteresis model.

In the following paragraph, the model selection criterion is checked to see it is able to identify the model which predicts the state of charge the best.

**Table 3: overview of the maximum and integral error for the different models in the different validation experiments.**

| | *Number of parameters* | *Residual cost function [°C²]* | *Average standard deviation [°C]* | *Minimum description length criterion [°C²]* |
|---|---|---|---|---|
| *Linear model* | *2* | *661* | *2.0* | *4.3* |
| *Polynomial model* | *4* | *436* | *1.6* | *3.1* |
| *Hysteresis model* | *12* | *424* | *1.6* | *3.5* |
| *Machine learning* | *0* | *1890* | *3.4* | *12.1* |

### Validation for a water buffer

In this experiment a set of new measurements were used on the same water buffer. Each model will predict the current heat capacity of the system and makes a prediction of the (change in the) state of charge. The experiment is broken down in three phases. Firstly, a heating process and next a cooling process is examined. Finally, the sequence of this heating and cooling cycle is examined. As measures for the prediction quality, the maximum error over this experiment and the final error after integrating the state of charge are used. The results of each model showing the numerical errors are summarized in Table 4.

The conclusion is that the model selection criterion is able to select that model with the best predictions (in this case the polynomial model). The second best performing models are the machine learning model and the linear model. That both models are very similar is not surprising, since both estimate somehow the average heat capacity.

**Table 4: overview of the maximum and integral error for the different models in the different validation experiments.**

| *[kWh]* | *Maximum error* | | | *Integral error* | | |
|---|---|---|---|---|---|---|
| | *loading* | *unloading* | *Cycles* | *loading* | *unloading* | *Cycles* |
| *Linear model* | ***0.87*** | *2.5* | *2.5* | *0.84* | *0.68* | *0.15* |
| *Polynomial model* | ***0.87*** | *2.5* | *2.5* | ***0.64*** | ***0.5*** | ***0.13*** |
| *Hysteresis model* | | | | | | |
| *Machine learning* | *1.14* | ***2.4*** | ***2.4*** | *1.14* | *0.95* | *0.19* |

### Conclusions

It has been shown that a selection of simple and complex models can be used to select one of the models to predict the State of Charge of an energy storage device, e.g. to predict the heat energy content of a PCM tank. As a benchmark a linear model can be used with a constant heat capacity, so ignoring latent heat in the PCM material. Variations in heat capacity as function of temperature were captured by a polynomial model, whose parameters are to be identified. From a first analysis of measurements, it appears that the heating and cooling process in the tested PCM tank differed severely. In order to catch this difference in a model, a hysteresis model has been used. Finally, a machine learning model is applied too. Here a k-nearest neighbour's method was used, which relates the heat capacity to the temperate and temperature's rate of change.

Firstly, the four models were matched on training data, which followed several loading and unloading cycles. The polynomial model performed best, while the hysteresis model performed hardly better than the linear model. However, this tells little about the quality of the models, since the complexity of the models can easily be used to mimic measurement noise and other random phenomena. To rule out overfitting, a model selection criterion is applied, which can tell which models balance best accuracy and precision. Finally, each model was tested on three validation experiments: one loading process, one unloading process and cycles, containing both. In turn out that the model selection criterion is able to identify that model, which predicts the heat capacity the best.

These tests are repeated on a different medium. Instead of a PCM material, a water tank is used. Again all four models were tuned on a training set; the model selection criterion identified the polynomial model this time as the best model. This is confirmed in a validation experiment.

The set of models used in embodiments of the present invention can be shipped with a controller for the energy storage device such as an electrical (e.g. battery) or thermal energy storage device. Thus the matching of the models can be carried out at any time in the future which allows the selected model to be updated for any changes in the materials or environment which affect the operation of the device.

### Implementation of the present invention

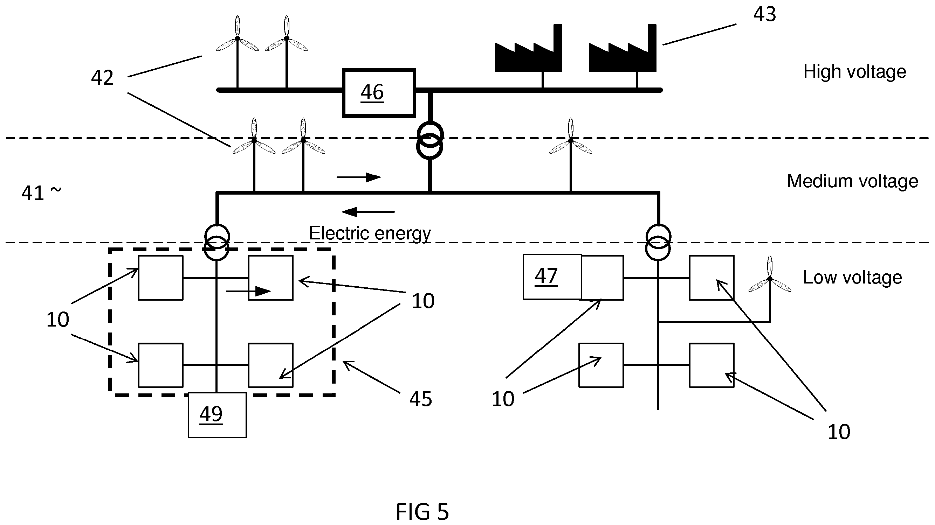

Embodiments of the present invention can be used with an electric power system 41 shown schematically in Figure 5 where there are different producers 42, 43 and electrical (e.g. battery) or thermal storage vessels 10 or clusters of such devices 45 which consume electric energy for charging the electrical (e.g. battery) or thermal storage vessels. For this purpose they are coupled through an electricity supply network 41. This electricity supply network 41 allows for generation and transmission of electric energy between consumer electrical (e.g. battery) or thermal storage vessels 10, or groups 45 of such vessels and producers 42, 43. In addition a telecommunications network (not shown) is provided so that all the elements of the network can communicate with the at least one central controller 46 or also any of a local controller 47 or a cluster controller 49. The central controller 46 can be provided for controlling operation of the electricity supply network 41. The local controllers 47 can be provided to control an electrical (e.g. battery) or thermal storage vessel or a number of such vessels 10 or, for example, the control can be by a cluster controller 49.

In addition electrical storage devices such as batteries can be used in battery farms to store electrical energy, e.g. from solar generation systems during the day to be supplied at night.

Ideally at all times during operation of such an electrical distribution system 41 there needs to be a balance between production and consumption. With a continued integration of renewable energy, these balancing requirements become more demanding in terms of energy, power and ramp rate or at least ramp up/down. Handling this is inefficient as it requires ramping (up/down) of mainly gas fired power plants which have unfavorable energy efficiency (primary energy to practical energy). This results in excessive energy consumption and pollution. A second important point is that the balancing assets are mainly connected to the high voltage network, whilst renewable energy generators 43 are often located at the low and medium voltage level causing local voltage and congestion issues, and which requires local flexibility to solve these.

Embodiments of the present invention can be used in the control or operation of the distribution of energy such as electricity supply to an electrical (e.g. battery) or thermal storage vessel or clusters of electrical (e.g. battery) or thermal storage vessels. Embodiments of the present invention are able to estimate the state of charge of one or more electrical (e.g. battery) or thermal energy storage vessels 10. The state of charge of the vessels is a parameter that is used in balancing the network e.g. by the central controller 46, local controller 47 or cluster controller 49 as the state of charge indicates how much electrical or thermal energy can be supplied by such a vessel but also how much energy it can receive and store thus allowing surplus energy to be turned into increased state of charge which can be used at a later time. Hence the predicted state of charge of one or more electrical (battery) or thermal energy storage vessels is preferably automatically transmitted to the central controller 46, local controller 47 or cluster controller 49, e.g. at regular time intervals. Alternatively, the central controller 46, local controller 47 or cluster controller 49 can poll each electrical (battery) or thermal energy storage vessel for the predicted SoC.

Embodiments of the present invention can be used in stabilizing or balancing of an electricity supply system and/or electricity distribution and/or transmission grid. The estimates of State of Charge (SoC) of one or more electrical (e.g. battery) or thermal storage vessels can be used by any of the following e.g. for balancing (*):
- network operators for system balancing and reserves
- energy suppliers or generators and/or Balancing Responsible Parties for balancing the portfolio of generation and consumption. The use of estimates of State of Charge in the moving of energy to and from the electrical (e.g. battery) or thermal storage vessels which can be implemented in real time and in a day-ahead planning scheme.
- Distribution system operators, who can use estimates of State of Charge in the moving of energy to and from the electrical (e.g. battery) or thermal storage vessels for the provision of balancing services to stabilize voltage fluctuations in the electricity distribution grid
- Transmission system operators, who can use estimates of State of Charge for moving energy to and from the electrical (e.g. battery) or thermal storage vessels in the stabilization of the frequency of the transmission grid
- any actor active within an electricity supply and/or distribution system.

An embodiment of the present invention comprises a network having at least a thermal storage system with at least two different thermal storage devices, e.g. a water buffer or a PCM buffer. There should be at least some different thermal storage devices like buffers in the network. Each thermal storage device such as a buffer can be heated by a heating source, like a thermal resistor, a heat pump of a combined heat and power system. The stored heat can be used by a heating user, as for example in directly coupled buildings or industrial applications, like chemical reactors that need heating. A heating network can be used to distribute the stored heat over several buildings and or industrial applications.

This heating source is connected to an electric grid that supplies electrical power to the source which absorbs electrical energy and converts into heat. In many situations, this electric grid suffers from congestion problems. For example, if too many photovoltaic installations are installed, the voltage in certain parts of the grid can rise above a critical level (typically 253 V) at certain times of the day. In that case the invertor providing power to the network from a renewable energy source switches itself off. The renewable energy which could have been captured from the renewable energy source such as by the photovoltaic panels is lost. In other situations, renewable sources such as photovoltaic installations or wind turbines are producing more energy than forecasted and cause imbalances in the electric grid. If no actions are taken, this causes instabilities in the grid, which may cause a black out. In addition, these instabilities are costly for the owners of these installations.

In other situations, these renewables may produce less energy than foreseen. This can result in unacceptable low voltage levels.

In this embodiment, the heating sources can be activated to stabilize the electricity grid and absorb redundant energy or to be switched off when a shortage appears. This can be done if the heat user's heating needs are still met, and if security of supply is guaranteed. To guarantee this, thermal and electric storage devices are important. They can decouple the moment when heat can be produced from the moment when heat is needed. For thermal storage devices, water is often used as a storage medium. In many particular situations, PCM materials can be a valuable alternative to water: heat can be stored at a pre-determined temperature, the energy density is larger. A disadvantage is that it is more complicated to estimate the current state of charge of a PCM based thermal storage device. Without a good estimate of the state of charge, one cannot know when the thermal storage device needs to be recharged. Therefore, the following information is preferably available: forecasts of future heat consumption of the heat users. These forecasts can be based on experience or measurements from the past, possibly combined with measurements of outside temperature. Forecasters are described in "Operational thermal load forecasting in district heating networks using machine learning and expert advice", Davy Geysen, Oscar De Somer, Christian Johansson, Jens Brage, Dirk Vanhoudt, Elsevier Energy and Buildings, December 2017; and "Operational Demand Forecasting In District Heating Systems Using Ensembles Of Online Machine Learning Algorithms", Christian Johansson, Markus Bergkvist, Davy Geysen, Oscar De Somer, Niklas Lavesson, Dirk Vanhoudt, 15th International Symposium on District Heating and Cooling, DHC15-2016, 4-7 September 2016, Seoul, South Korea, pages 208-216.

In order to identify the state of charge, at least one state sensor such as a temperature sensor needs to be placed in the storage device. Sensors on each of these thermal storage devices transmit their measurements to a controller which can be the central controller 46 or the at least one local controller 47 or the at least one cluster controller 49 of an electricity supply grid. The set of models disclosed in embodiments of the present invention (e.g. at least three models or four models) can be shipped with the controller for the thermal storage device such as an electrical (e.g. battery) or thermal energy storage device. Thus the matching of the models can be carried out at any time in the future which allows the selected model to be updated for any changes in the materials or environment which affect the operation of the device.

For example, the controller (whichever it is) can be adapted to download the set of models (e.g. at least three or four) from a central store and to install the various models mentioned above. In operation the local controller uses the historical measurement data from the state sensor to match the model and then operates the appropriate model for its own device. The result is a state of charge prediction for each storage device.

Once the state of charge is known, the local, cluster or central controller can inform the predicted state of charge to whichever controller controls the electric consumption of the heating sources. This controller can postpone activation or activate devices in order to lower imbalances in the electric distribution grid. Suitable control algorithms are disclosed in De Ridder, Fjo, and Bert Claessens. "A trading strategy for industrial CHPs on multiple power markets." International Transactions on Electrical Energy Systems 24.5 (2014): 677-697, for example, or PowerMatcher: "Multiagent control in the electricity infrastructure", K. Kok, C.J. Warmer, I.G. Kamphuis, copyright 2005 ACM 1-59593-150-2/05/0007.

Further, the estimates of the State of Charge of one or more thermal storage vessels can be used by any of the following e.g. for stabilizing a thermal energy network such as a district heating network or a district cooling network, for:
- stabilizing the temperature of the heat network
- stabilizing the flow rate within a heat network by changing the inlet temperature and energy content of the heat network
- peak shaving:
   ∘ stabilizing the heat and cooling demand of buildings connected to a heat network and thus avoiding peak demands of these buildings.
   ∘ Stabilizing the heat and cooling demand of a heat network by storing energy during off-peak periods and providing heat and cooling during peak periods.

If a thermal storage vessel is connected to a heating or cooling network, the state of charge of the vessel can be provided automatically to a controller of the heating or cooling network, e.g. so that energy production can be steered more precisely. The State of Charge can be sent automatically at regular intervals or the State of Charge of each thermal energy storage vessel can be requested by the controller, e.g. the State of Charge of each vessel can be accessed by the controller polling the vessels.

If a thermal storage vessel is used to provide heating and/or cooling to a building or a series of buildings, the state of the vessel can be sent automatically to the controller of the heating and/or cooling systems, so that future heat production can be steered. The State of Charge can be sent automatically at regular intervals or the State of Charge of each energy storage vessel can be requested by the controller, e.g. the State of Charge of each vessel can be accessed by the controller poling the vessels. Heat can for example be provided by heat pumps and/or CHPs (Combined heat and power devices). These are coupled to the electricity grid and state of charge estimates of the vessels can be used by the controller to lower operational costs, or can be incorporated in a control scheme if these devices provided services like mentioned above.

In many countries buildings are heated by heat networks. In these networks a central heating source, like a pellet installation, provides heat to the network and hence to buildings (i.e. heat users) who can use the heat provided by these heating networks. The common practice in these networks is that heat users do not communicate with each other in order to avoid capacity problems in the heating network. The result is that if all heat users demand heat at the same moment (as can happen due to common behaviour), the central heating source might not have enough capacity to provide all this heat. This could lead to a violation of security of supply. To avoid this an additional heating source is often added. This additional heating source is for example a fuel boiler.

The heating costs of this additional (backup) source are usually higher than of the district heating network. This back-up installation needs maintenance. An alternative is to install a heat storage system next to the heating source or at other places in the grid. Usually the storage medium is water, but if the space is limited or the temperature ranges differs, PCM can be used as an alternative. The main problem with such storage installations is that the determination of the state of charge of such heat storage systems is important: the operator or a central control unit operated by the operator needs to know when the storage devices need to be recharged. In order to identify the state of charge in embodiments of the present invention, at least one temperature sensor needs to be placed in each storage device. Sensors on each of these storage devices transmit their measurements to a controller which can be a central controller or at least one local controller or the at least one cluster controller. The set of models disclosed in embodiments of the present invention, e.g. at least three or four models, can be shipped with the device controller for the energy storage device such as a thermal energy storage device. Thus the matching of the models can be carried out at any time in the future by the device controller which allows the selected model to be updated for any changes in the materials or environment which affect the operation of the device.

For example, a local controller downloads the models from a central store and installs the various models mentioned in the patent application. The local controller uses the historical measurement data from the sensor to match the model and then operates the appropriate model for its own device. The result is a state of charge prediction for each storage device which can be sent to a further controller such as a central controller that steers the heating devices and can decide to load the distributed heating network with heat from the thermal storage device and or from the heating source. The state of charge of the thermal storage device can be used to determine an upper bound and a lower bound for the consumption or provision of thermal energy from the storage device. These upper and lower bounds indicate the flexibility of the thermal storage device which can be used in optimisations of the operation of the heat network. An example of a controller is provided by the Horizon 2020 STORM project https://en.vleva.eu/sites/en.vleva.eu/files/events/attachments/3_johan_desmedt_energyville _0.pdf. The controller includes a Forecaster responsible for generating day ahead forecasts for the heat load of the network and further, quantifying the available flexibility in the network. A Planner which uses the forecast of heat load a flexibility, and optimizes certain objectives, depending on the use cases, to give a day ahead plan. A Tracker works on grid level to take the control plan from the Planner and dispatch this among all the underlying buildings and/or thermal storage devices. The Planner makes use of a buffer or thermal storage device model which can be one of the models described with reference to this invention. The evolution of the state of charge, i.e. predictions as to state of charge of thermal storage devices, is used by the Planner. The Tracker tracks the control plan and is provided with algorithms to follow it as closely as possible. A Virtual Distributed Energy Resource connected to each building, or other flexibility resource such as a thermal storage device is provided for participating in grid actions.

A further controller is described in International Patent Application PCT/EP2017/084667, filed 27 Dec 2017 entitled "Hierarchical implicit controller for shielded system in a grid". A DSO platform is disclosed as well as a method of integrating load flow calculations. A particular mathematical implementation of a Planner and a Tracker are disclosed. A Dynamic Coalition Manager (DCM) platform is also disclosed, whereby both the DCM and DSO platforms are coupled through files with integrated software modules which are operational and able to reduce curtailment. In embodiments of the present invention a day-ahead optimization algorithm can be devised that limits the curtailment of system-level RES by means of thermal storage devices or buffers specifically designed to absorb excess energy and provide seasonal heat storage and/or can feed a district heating network and accessing flexibility in buildings. A day-ahead forecast generates building load profiles, building flex capabilities, and a local grid model that contains a mapping of the individual buildings and predicted state of charge of thermal storage devices according to a model thereof as disclosed in the present invention, as well as an indication of when curtailment is foreseen. Based on the received information, the use of a predicted state of charge of thermal storage devices based on a model as described in the present invention can minimize RES curtailment in a local grid secure manner.

The steering can include:
- stabilizing a temperature of the heat network
- stabilizing a flow rate within a heat network by changing an inlet temperature and an energy content of the heat network, or
- peak shaving.

The peak shaving can include :
stabilizing heat and cooling demand of buildings connected to a heat network and thus avoiding peak demands of these buildings, or
stabilizing heat and cooling demand of a heat network by storing energy during off-peak periods and providing heat and cooling during peak periods.

In embodiments of the present invention, the state of charge estimation is critical to control the distribution grids. For PCM materials or even for simple water tanks with, for example, complicated geometries, the state of charge is not simply proportional to temperature. If this relation cannot be assumed, estimating the state of charge is not accurate or can simply not be performed. Under such conditions, security of supply cannot be guaranteed, unless one is willing to invest large amounts in distribution grids, so that congestion problems cannot happen or invest in large back-up installations. The alternative is to install a heat buffer in such grids. To operate these heat buffers, embodiments of the present invention provide a device enabling a controller such as the central controller access to reliable state of charge estimates.

In addition, the estimates of the State of Charge can be determined for heat pumps. The condensing fluid used in heat pumps can be partly or largely in the liquid or gas phase. Its state determines the energy consumption in the near future. If a heat pump is used for any of the above mentioned applications its energy and power consumption will depend on the internal state. Estimates of the State of Charge of heat pumps allow estimation of energy and power consumption of the heat pumps. The internal state needs to be known when such devices are used e.g. in a real time frequency control application or voltage stabilization scheme.

Heat exchangers equipped with phase change materials can cope with peak demands in heating or cooling in district heating or cooling networks. To operate such heat exchangers the state of the phase change material needs to be monitored by a controller of the district heating or cooling network.

To improve the climate in buildings, phase change materials or heat storage materials are often used. If the internal climate is controlled with heat pumps connected to the electricity grid or if peak shaving is applied to the heating device or if the heat is provided by a heat network, the state of charge of the phase change material or heat storage material needs to be known.

Embodiments of the present invention allow state of charge estimates to be predicted for use in these applications and for the automatic or polled communication of the State of Charge to the controller of the respective network.

An embodiment of the present invention of method to predict a State of Charge of an energy storage device can be implemented by a digital device with processing capability including one or more microprocessors, processors, microcontrollers, or central processing units (CPU) and/or a Graphics Processing Units (GPU) adapted to carry out the respective functions programmed with software, i.e. one or more computer programs. The software can be compiled to run on any of the microprocessors, processors, microcontrollers, or central processing units (CPU) and/or a Graphics Processing Units (GPU).

Such a device may be a standalone device or may be embedded in another electronic component. The device may have memory (such as non-transitory computer readable medium, RAM and/or ROM), an operating system, optionally a display such as a fixed format display such as an OLED display, data entry devices such as a keyboard, a pointer device such as a "mouse", serial or parallel ports to communicate with other devices, network cards and connections to connect to a network.

The software can be embodied in a computer program product adapted to carry out the following functions when the software is loaded onto the respective device or devices or any other device such as a network device of which a server is one example and executed on one or more processing engines such as microprocessors, ASIC's, FPGA's etc. Methods according to embodiments of the present invention can be applied to a system having one or more energy storage vessels such as electrical (e.g. battery) or thermal energy storage vessels. These can be powered by an electrical distribution system for supplying electrical power to the energy storage devices such as electrical (e.g. battery) or thermal energy storage vessels.

The software can be embodied in a computer program product adapted to carry out the following functions, when the software is loaded onto the respective device or devices, and executed on one or more processing engines such as microprocessors, ASIC's, FPGA's etc:
loading of a set of models for the energy capacity of an energy storage device,
matching of each of these models or machine learning methods to experimental data of the energy storage device,
applying a model selection criterion to identify the most appropriate model,
predicting an energy content for a specific time based on the selected model,
whereby one of the models is preferably a linear model, and/or
one of the models is preferably a polynomial model, and/or
one of the models is preferably a hysteresis model, and/or
one of the models is preferably based on machine learning.

The set of models used in embodiments of the present invention can be shipped with a controller for the energy storage device such as an electrical (e.g. battery) or thermal energy storage device. Thus the matching of the models can be carried out at any time in the future which allows the selected model to be updated for any changes in the materials or environment which affect the operation of the device.

The software can be embodied in a computer program product adapted to carry out the following functions, when the software is loaded onto the respective device or devices, and executed on one or more processing engines such as microprocessors, ASIC's, FPGA's etc:
selecting a model is based on information theory,
identifying that model which best balances accuracy and precision.

The software can be embodied in a computer program product adapted to carry out the following functions, when the software is loaded onto the respective device or devices, and executed on one or more processing engines such as microprocessors, ASIC's, FPGA's etc:
receiving output of a state sensor which captures a physical property of the energy storage device
storing historical values of the output of a state sensor
storing values of rate of change of the output of a state sensor.

The software can be embodied in a computer program product adapted to carry out the following functions, when the software is loaded onto the respective device or devices, and executed on one or more processing engines such as microprocessors, ASIC's, FPGA's etc:
- load a set of models and machine learning methods
- automatically estimate model parameters,
- identify the most appropriate model,
- estimate the energy content of the energy storage device.

The software can be embodied in a computer program product adapted to carry out the following functions, when the software is loaded onto the respective device or devices, and executed on one or more processing engines such as microprocessors, ASIC's, FPGA's etc:
executing a calibration model incorporating nonlinear relations
using a combination of dynamic measurements of the state sensor output
outputting an estimate of the state of charge of energy storage device.

The software can be embodied in a computer program product adapted to carry out the following functions, when the software is loaded onto the respective device or devices, and executed on one or more processing engines such as microprocessors, ASIC's, FPGA's etc:
automatically transmitting the predicted state of charge to a central, cluster or local controller of an electricity distribution system or of a district heating or cooling network or a building heating or cooling system,
the automatic transmitting may be done at time intervals or can be polled by the controller.

The transmitting, for example being to a central controller 46, local controller 47 or a cluster controller 49 of the electricity distribution system for use in balancing of the electricity distribution system or in the control of heating or cooling systems.

Any of the software mentioned above may be stored on a non-transitory signal storage means such as an optical disk (CD-ROM, DVD-ROM), magnetic tape, solid state memory such as a flash drive, magnetic disk such as a computer hard drive or similar.

### Uncertainty

The uncertainty estimation on the heat capacity can be summarised. It is estimated from equation (2) for finite steps *C* = *P*/(Δ*T*/Δ*t*). It is assumes that the uncertainty in time is much smaller than in the other variables and can be ignored. Assuming that all observations are independently identically distributed, the variance on the heat capacity is in first order approximation ${σ}_{c}^{2} = {\left(Δt/ΔT\right)}^{2} {σ}_{P}^{2} + 2 {\left(2Δ{t}^{2}/Δ{T}^{2}\right)}^{2} {σ}_{P}^{2}$. The power is estimated from the flow *F* [L/min] and the temperature difference over the PCM tank: *P = F*(*Tᵢₙ -Tₒᵤₜ*). Under the same assumption, the variance on the power is ${σ}_{P}^{2} = {\left({T}_{in}-{T}_{out}\right)}^{2} {σ}_{F}^{2} + 2 {F}^{2} {σ}_{T}^{2}$. Substituting this equation in the estimation of the variance on the heat capacity and rearranging the terms results in ${σ}_{c}^{2} = {\left(\left({T}_{in}-{T}_{out}\right)Δ{t}^{2}/ΔT\right)}^{2} {σ}_{F}^{2} + \left(2{F}^{2}Δ{t}^{2}+8Δ{t}^{2}/Δ{T}^{4}\right) {σ}_{T}^{2}$*.* Note that the uncertainty increases proportional to the inverse of the fourth power of Δ*T.* So if the temperature difference between two subsequent steps tends to zero, the uncertainty becomes infinite. Typical values used as estimates for the precision on the flow and temperature measurements are: flow is typically 10 L/min with a precision of 5%; the precision on the mean temperature was chosen to be 0.01 °C.

## Claims

1. A computer based method for controlling a distributed heating or cooling network providing heat energy to buildings, the distributed heating network comprising at least one heating or cooling source and at least two different thermal storage devices, the at least two different thermal storage devices comprising a PCM based buffer, each of the at least two different thermal storage devices having a state sensor, the method comprising:
loading a set of at least three models for the energy capacity of a thermal storage device, one of the models being a hysteresis model;
matching each of these models to historical data of measurements of the state sensor of each of at least two different thermal storage devices;
applying a model selection criterion to identify the most appropriate model of the at least three models for each of the at least two different thermal storage devices, predicting an energy content of each of the at least two different thermal storage devices for a specific time based on the selected model, and
steering the distributed heating network with heat energy from one or both of the at least two different storage devices and/or from the heating source using the predicting of the energy content of each of the at least two different thermal storage devices, the heat energy being heating or cooling energy.

2. The method according to any of the previous claims, wherein steering the distributed heating network includes:
- stabilizing a temperature of the heat network
- stabilizing a flow rate within a heat network by changing an inlet temperature and an energy content of the heat network, or
- peak shaving.

3. The method according to claim 2, wherein peak shaving includes any of:
stabilizing the heat and cooling demand of buildings connected to a heat network and thus avoiding peak demands of these buildings.
Stabilizing the heat and cooling demand of a heat network by storing energy during off-peak periods and providing heat and cooling during peak periods.

4. A computer based method for controlling an electricity distribution network providing electrical energy for charging at least two different energy storage devices selected from a thermal storage device of a heat network and an electrical storage device, the thermal storage device being a PCM based buffer, each of the at least two different storage devices having a state sensor, the method comprising:
loading a set of at least three models for the energy capacity of a storage device, one of the models being a hysteresis model;
matching each of these models to historical data of measurements of the state sensor of each of at least two different energy storage devices;
applying a model selection criterion to identify the most appropriate model of the at least three models for each of the at least two different energy storage devices, predicting an energy content of each of the at least two different energy storage devices for a specific time based on the selected model, and
steering the electricity distributed network to provide electrical energy to one or both of the at least two different energy devices dependent upon the predicting of the energy content of each of the at least two different energy storage devices.

5. The method according to claim 4, wherein steering includes postponing charging or activating charging of one or both of the at least two different energy storage devices in order to lower imbalances in the electric distribution grid.

6. The method according to any of the claims 4 to 5, wherein steering includes balancing generation and consumption in the electricity distribution network, moving of energy to and from the electrical or thermal storage devices, stabilizing voltage fluctuations in the electricity distribution network, or stabilization of the frequency of the electricity distribution network.

7. The method according to any of the previous claims, wherein
one of the models is a linear model and/or
one of the models is a polynomial model and/or
one of the models is based on machine learning.

8. The method according to any of the previous claims, wherein applying a model selection criterion is based on information theory.

9. The method according to any of the previous claims, further comprising: receiving output of the state sensor of each of at least two different thermal or energy storage devices, the state sensor capturing a physical property of the thermal or energy storage device.

10. The method according to claim 9, further comprising:
storing historical values of the output of the state sensor of each of at least two different thermal or energy storage devices, and/or
storing values of rate of change of the output of the state sensor of each of at least two different thermal or energy storage devices.

11. The method according to any of the previous claims, comprising:
automatically transmitting the predicted energy content to a controller of an electricity distribution system, for use in balancing of the electricity distribution system or to a controller of a further heating or cooling network.

12. A computer based system for controlling a distributed heating or cooling network providing heat energy to buildings, the distributed heating network comprising at least one heating or cooling source and at least two different thermal storage devices, the at least two different thermal storage devices comprising a PCM based buffer, each of the at least two different thermal storage devices having a state sensor, the system comprising:
means for loading a set of at least three models for the energy capacity of a thermal storage device, one of the models being a hysteresis model;
means for matching each of these models to historical data of measurements of the state sensor of each of at least two different thermal storage devices;
means for applying a model selection criterion to identify the most appropriate model of the at least three models for each of the at least two different thermal storage devices,
means for predicting an energy content of each of the at least two different thermal storage devices for a specific time based on the selected model, and
means for steering the distributed heating network with heat energy from one or both of the at least two different storage devices and/or from the heating source using the predicting of the energy content of each of the at least two different thermal storage devices,
wherein the heat energy is heating or cooling energy.

13. A computer based system for controlling an electricity distribution network providing electrical energy for charging at least two different energy storage devices selected from a thermal storage device of a heat network and an electrical storage device, wherein the thermal storage device is a PCM based buffer, each of the at least two different storage devices having a state sensor, the system comprising:
means for loading a set of at least three models for the energy capacity of a storage device, one of the models being a hysteresis model;
means for matching each of these models to historical data of measurements of the state sensor of each of at least two different energy storage devices;
means for applying a model selection criterion to identify the most appropriate model of the at least three models for each of the at least two different energy storage devices,
means for predicting an energy content of each of the at least two different energy storage devices for a specific time based on the selected model, and
means for steering the electricity distributed network to provide electrical energy to one or both of the at least two different energy devices dependent upon the predicting of the energy content of each of the at least two different energy storage devices.

14. A plurality of energy storage devices adapted to be coupled into a thermal or electrical distribution network, at least one of the plurality of energy storage devices comprising a PCM based buffer, each energy storage device comprising:
a controller for predicting a state of charge of the energy storage device, the controller having
means to receive measurements of a state sensor of the energy storage device means for loading a set of at least three models for an energy capacity of the energy storage device, the at least three models being the same for each energy storage device
means for matching each of these models to historical data of measurements of the state sensor of the energy storage device
means for applying a model selection criterion to identify the most appropriate model, and means for predicting an energy content of the energy storage device for a specific time based on the selected model,
wherein one of the models is a hysteresis model.

15. A computer program product for executing the method of any of the claims 1 to 11, when executed on a processing engine.

## Patentansprüche

1. Computerbasiertes Verfahren zum Steuern eines verteilten Heiz- oder Kühlnetzes, das Wärmeenergie an Gebäude bereitstellt, wobei das verteilte Heiznetz mindestens eine Heiz- oder Kühlquelle und mindestens zwei unterschiedliche Wärmespeichervorrichtungen umfasst, wobei die mindestens zwei unterschiedlichen Wärmespeichervorrichtungen einen PCM-basierten Puffer umfassen, wobei jede der mindestens zwei unterschiedlichen Wärmespeichervorrichtungen einen Zustandssensor aufweist, wobei das Verfahren Folgendes umfasst:
Laden eines Satzes aus mindestens drei Modellen für die Energiekapazität einer Wärmespeichervorrichtung, wobei eines der Modelle ein Hysteresemodell ist;
Anpassen jedes dieser Modelle an historische Daten von Messungen des Zustandssensors jeder von mindestens zwei unterschiedlichen Wärmespeichervorrichtungen;
Anwenden eines Modellauswahlkriteriums, um für jede der mindestens zwei unterschiedlichen Wärmespeichervorrichtungen das am besten geeignete Modell der mindestens drei Modelle zu identifizieren, Vorhersagen eines Energieinhalts jeder der mindestens zwei unterschiedlichen Wärmespeichervorrichtungen für einen bestimmten Zeitpunkt basierend auf dem ausgewählten Modell; und
Steuern des verteilten Heiz- oder Kühlnetzes mit Wärmeenergie aus einer oder beiden der mindestens zwei unterschiedlichen Wärmespeichervorrichtungen und/oder aus der Heizquelle unter Verwendung des Vorhersagens des Energieinhalts jeder der mindestens zwei unterschiedlichen Wärmespeichervorrichtungen, wobei die Wärmeenergie Heizenergie oder Kühlenergie ist.

2. Verfahren nach einem der vorstehenden Ansprüche, wobei das Steuern des verteilten Heiznetzes Folgendes beinhaltet:
- Stabilisieren einer Temperatur des Heiznetzes
- Stabilisieren einer Strömungsrate innerhalb eines Heiznetzes durch Ändern einer Einlasstemperatur und eines Energieinhalts des Heiznetzes, oder
- Spitzenlastkappen.

3. Verfahren nach Anspruch 2, wobei das Spitzenlastkappen eines beinhaltet von:
Stabilisieren des Wärme- und Kühlbedarfs von Gebäuden, die mit einem Heiznetz verbunden sind, und daher Vermeiden von Spitzenbedarf dieser Gebäude.
Stabilisieren des Wärme- und Kühlbedarfs eines Heiznetzes durch Speichern von Energie während Schwachlastzeiten und Bereitstellen von Wärme und Kühlen während Spitzenlastzeiten.

4. Computerbasiertes Verfahren zum Steuern eines Elektrizitätsverteilungsnetzes, das elektrische Energie zum Laden von mindestens zwei unterschiedlichen Energiespeichervorrichtungen, die aus einer Wärmespeichervorrichtung eines Heiznetzes und einer elektrischen Speichervorrichtung ausgewählt sind, bereitstellt, wobei die Wärmespeichervorrichtung ein PCM-basierter Puffer ist, wobei jede der mindestens zwei unterschiedlichen Speichervorrichtungen einen Zustandssensor aufweist, wobei das Verfahren Folgendes umfasst:
Laden eines Satzes aus mindestens drei Modellen für die Energiekapazität einer Speichervorrichtung, wobei eines der Modelle ein Hysteresemodell ist;
Anpassen jedes dieser Modelle an historische Daten von Messungen des Zustandssensors jeder von mindestens zwei unterschiedlichen Energiespeichervorrichtungen;
Anwenden eines Modellauswahlkriteriums, um für jede der mindestens zwei unterschiedlichen Energiespeichervorrichtungen das am besten geeignete Modell der mindestens drei Modelle zu identifizieren, Vorhersagen eines Energieinhalts jeder der mindestens zwei unterschiedlichen Energiespeichervorrichtungen für einen bestimmten Zeitpunkt basierend auf dem ausgewählten Modell; und
Steuern des verteilten Elektrizitätsnetzes, um elektrische Energie an eine oder beide der mindestens zwei unterschiedlichen Energievorrichtungen abhängig von dem Vorhersagen des Energieinhalts jeder der mindestens zwei unterschiedlichen Energiespeichervorrichtungen bereitzustellen.

5. Verfahren nach Anspruch 4, wobei das Steuern das Aufschieben des Ladens oder Aktivieren des Ladens eines oder beider der mindestens zwei unterschiedlichen Energiespeichervorrichtungen beinhaltet, um Unausgewogenheiten im Stromverteilungsnetz zu verringern.

6. Verfahren nach einem der Ansprüche 4 bis 5, wobei das Steuern das Ausgleichen von Erzeugung und Verbrauch des Stromverteilungsnetzes, das Bewegen von Energie zu und von der elektrischen oder der Wärmespeichervorrichtung, das Stabilisieren von Spannungsschwankungen in dem Stromverteilungsnetzwerk oder das Stabilisieren der Frequenz des Stromverteilungsnetzwerks beinhaltet.

7. Verfahren nach einem der vorstehenden Ansprüche, wobei eines der Modelle ein lineares Modell ist und/oder eines der Modelle ein Polynommodell ist und/oder eines der Modelle auf Machine-Learning basiert.

8. Verfahren nach einem der vorherigen Ansprüche, wobei das Anwenden eines Modellauswahlkriteriums auf Informationstheorie basiert.

9. Verfahren nach einem der vorstehenden Ansprüche, das weiter Folgendes umfasst:
Empfangen eines Ausgangs des Zustandssensors jeder der mindestens zwei unterschiedlichen Wärme- oder Energiespeichervorrichtungen, wobei der Zustandssensor eine physikalische Eigenschaft der Wärme- oder Energiespeichervorrichtung aufnimmt.

10. Verfahren nach Anspruch 9, das ferner Folgendes umfasst:
Speichern historischer Werte des Ausgangs des Zustandssensors jeder der mindestens zwei unterschiedlichen Wärme- oder Energiespeichervorrichtungen, und/oder Speichern der Änderungsratenwerte des Ausgangs des Zustandssensors jeder der mindestens zwei unterschiedlichen Wärme- oder Energiespeichervorrichtungen.

11. Verfahren nach einem der vorherigen Ansprüche, das Folgendes umfasst:
automatisches Übertragen des vorhergesagten Energieinhalts an eine Steuervorrichtung eines Stromverteilungssystems zur Verwendung beim Ausgleichen des Stromverteilungssystems oder an eine Steuervorrichtung eines weiteren Wärme- oder Kühlnetzes.

12. Computerbasiertes System zum Steuern eines verteilten Heiz- oder Kühlnetzes, das Wärmeenergie an Gebäude bereitstellt, wobei das verteilte Heiznetz mindestens eine Heiz- oder Kühlquelle und mindestens zwei unterschiedliche Wärmespeichervorrichtungen umfasst, wobei die mindestens zwei unterschiedlichen Wärmespeichervorrichtungen einen PCM-basierten Puffer umfassen, wobei jede der mindestens zwei unterschiedlichen Wärmespeichervorrichtungen einen Zustandssensor aufweist, wobei das System Folgendes umfasst:
Mittel zum Laden eines Satzes aus mindestens drei Modellen für die Energiekapazität einer Wärmespeichervorrichtung, wobei eines der Modelle ein Hysteresemodell ist;
Mittel zum Anpassen jedes dieser Modelle an historische Daten von Messungen des Zustandssensors jeder von mindestens zwei unterschiedlichen Wärmespeichervorrichtungen;
Mittel zum Anwenden eines Modellauswahlkriteriums zum Identifizieren des am besten geeigneten Modells der mindestens drei Modelle für jede der mindestens zwei unterschiedlichen Wärmespeichervorrichtungen,
Mittel zum Vorhersagen eines Energieinhalts jeder der mindestens zwei unterschiedlichen Wärmespeichervorrichtungen für einen bestimmten Zeitpunkt basierend auf dem ausgewählten Modell, und Mittel zum Steuern des verteilten Heiznetzes mit Wärmeenergie aus einer oder beiden der mindestens zwei unterschiedlichen Speichervorrichtungen und/oder aus der Heizquelle unter Verwendung des Vorhersagens des Energieinhalts jeder der mindestens zwei unterschiedlichen Wärmespeichervorrichtungen,
wobei die Wärmeenergie Heiz- oder Kühlenergie ist.

13. Computerbasiertes System zum Steuern eines Elektrizitätsverteilungsnetzes, das elektrische Energie zum Laden von mindestens zwei unterschiedlichen Energiespeichervorrichtungen, die aus einer Wärmespeichervorrichtung eines Heiznetzes und einer elektrischen Speichervorrichtung ausgewählt sind, bereitstellt, wobei die Wärmespeichervorrichtung ein PCM-basierter Puffer ist, wobei jede der mindestens zwei unterschiedlichen Speichervorrichtungen einen Zustandssensor aufweist, wobei das System Folgendes umfasst:
Mittel zum Laden eines Satzes aus mindestens drei Modellen für die Energiekapazität einer Speichervorrichtung, wobei eines der Modelle ein Hysteresemodell ist;
Mittel zum Anpassen jedes dieser Modelle an historische Daten von Messungen des Zustandssensors jeder von mindestens zwei unterschiedlichen Energiespeichervorrichtungen;
Mittel zum Anwenden eines Modellauswahlkriteriums zum Identifizieren des am besten geeigneten Modells für jede der mindestens zwei unterschiedlichen Energiespeichervorrichtungen,
Mittel zum Vorhersagen eines Energieinhalts jeder der mindestens zwei unterschiedlichen Energiespeichervorrichtungen für einen spezifischen Zeitpunkt basierend auf dem ausgewählten Modell, und
Mittel zum Steuern des verteilten Elektrizitätsnetzes zum Bereitstellen elektrischer Energie an eine oder beide der mindestens zwei unterschiedlichen Energievorrichtungen in Abhängigkeit von dem Vorhersagen des Energieinhalts jeder der mindestens zwei unterschiedlichen Energiespeichervorrichtungen.

14. Vielzahl von Energiespeichervorrichtungen, die angepasst sind, um in ein Wärme- oder Stromverteilungsnetz gekoppelt zu werden, wobei mindestens eine der Vielzahl von Energiespeichervorrichtungen einen PCM-basierten Puffer umfasst, wobei jede Energiespeichervorrichtung Folgendes umfasst:
eine Steuervorrichtung zum Vorhersagen eines Ladezustands der Energiespeichervorrichtung, wobei die Steuervorrichtung Folgendes aufweist
Mittel zum Empfangen von Messungen eines Zustandssensors des Energiespeichervorrichtungsmittels zum Laden eines Satzes aus mindestens drei Modellen für eine Energiekapazität der Energiespeichervorrichtung, wobei die mindestens drei Modelle dieselben für jede Energiespeichervorrichtung sind
Mittel zum Anpassen jedes dieser Modelle an historische Daten von Messungen des Zustandssensors der Energiespeichervorrichtung
Mittel zum Anwenden eines Modellauswahlkriteriums zum Identifizieren des am besten geeigneten Modells, und Mittel zum Vorhersagen eines Energieinhalts der Energiespeichervorrichtung für einen spezifischen Zeitpunkt basierend auf dem ausgewählten Modell, wobei eines der Modelle ein Hysteresemodell ist.

15. Computerprogrammprodukt für das Ausführen des Verfahrens nach einem der Ansprüche 1 bis 11, wenn es auf einer Verarbeitungsmaschine ausgeführt wird.

## Revendications

1. Procédé mis en œuvre par ordinateur pour commander un réseau de chauffage ou de refroidissement distribué fournissant de l'énergie thermique à des bâtiments, le réseau de chauffage distribué comprenant au moins une source de chauffage ou de refroidissement et au moins deux dispositifs de stockage thermique différents, les au moins deux dispositifs de stockage thermique différents comprenant un tampon à base de MCP, chacun des au moins deux dispositifs de stockage thermique différents ayant un capteur d'état, le procédé comprenant :
le chargement d'un ensemble d'au moins trois modèles pour la capacité énergétique d'un dispositif de stockage thermique, l'un des modèles étant un modèle à hystérésis ;
la mise en correspondance de chacun de ces modèles avec des données historiques de mesures du capteur d'état de chacun d'au moins deux dispositifs de stockage thermique différents ;
l'application d'un critère de sélection de modèle pour identifier le modèle le plus approprié parmi les au moins trois modèles pour chacun des au moins deux dispositifs de stockage thermique différents,
la prédiction d'un contenu énergétique de chacun des au moins deux dispositifs de stockage thermique différents pour un instant spécifique sur la base du modèle sélectionné, et
le pilotage du réseau de chauffage distribué avec de l'énergie thermique provenant de l'un ou des deux des au moins deux dispositifs de stockage différents et/ou de la source de chauffage en utilisant la prédiction du contenu énergétique de chacun des au moins deux dispositifs de stockage thermique différents, l'énergie thermique étant une énergie de chauffage ou de refroidissement.

2. Procédé selon l'une quelconque des revendications précédentes, dans lequel le pilotage du réseau de chauffage distribué inclut :
- la stabilisation d'une température du réseau thermique,
- la stabilisation d'un débit à l'intérieur d'un réseau thermique en modifiant une température d'entrée et un contenu énergétique du réseau thermique, ou
- l'écrêtage des pointes.

3. Procédé selon la revendication 2, dans lequel l'écrêtage des pointes inclut l'une quelconque des opérations suivantes :
la stabilisation de la demande en chaleur et en froid des bâtiments raccordés à un réseau thermique, évitant ainsi les demandes de pointe de ces bâtiments ;
la stabilisation de la demande en chaleur et en froid d'un réseau thermique en stockant de l'énergie pendant les périodes creuses et en fournissant de la chaleur et du froid pendant les périodes de pointe.

4. Procédé mis en œuvre par ordinateur pour commander un réseau de distribution d'électricité fournissant de l'énergie électrique pour charger au moins deux dispositifs de stockage d'énergie différents choisis parmi un dispositif de stockage thermique d'un réseau thermique et un dispositif de stockage électrique, le dispositif de stockage thermique étant un tampon à base de MCP, chacun des au moins deux dispositifs de stockage différents ayant un capteur d'état, le procédé comprenant :
le chargement d'un ensemble d'au moins trois modèles pour la capacité énergétique d'un dispositif de stockage, l'un des modèles étant un modèle à hystérésis ;
la mise en correspondance de chacun de ces modèles avec des données historiques de mesures du capteur d'état de chacun d'au moins deux dispositifs de stockage d'énergie différents ;
l'application d'un critère de sélection de modèle pour identifier le modèle le plus approprié parmi les au moins trois modèles pour chacun des au moins deux dispositifs de stockage d'énergie différents,
la prédiction d'un contenu énergétique de chacun des au moins deux dispositifs de stockage d'énergie différents pour un instant spécifique sur la base du modèle sélectionné, et
le pilotage du réseau de distribution d'électricité pour fournir de l'énergie électrique à l'un ou aux deux des au moins deux dispositifs d'énergie différents en fonction de la prédiction du contenu énergétique de chacun des au moins deux dispositifs de stockage d'énergie différents.

5. Procédé selon la revendication 4, dans lequel le pilotage inclut le report ou l'activation de la charge de l'un ou des deux des au moins deux dispositifs de stockage d'énergie différents afin de réduire les déséquilibres dans le réseau de distribution électrique.

6. Procédé selon l'une quelconque des revendications 4 à 5, dans lequel le pilotage inclut l'équilibrage de la production et de la consommation dans le réseau de distribution d'électricité, le transfert d'énergie vers et depuis les dispositifs de stockage électrique ou thermique, la stabilisation des fluctuations de tension dans le réseau de distribution d'électricité, ou la stabilisation de la fréquence du réseau de distribution d'électricité.

7. Procédé selon l'une quelconque des revendications précédentes, dans lequel
l'un des modèles est un modèle linéaire et/ou
l'un des modèles est un modèle polynomial et/ou
l'un des modèles est basé sur l'apprentissage automatique.

8. Procédé selon l'une quelconque des revendications précédentes, dans lequel l'application d'un critère de sélection de modèle est basée sur la théorie de l'information.

9. Procédé selon l'une quelconque des revendications précédentes, comprenant en outre :
la réception de la sortie du capteur d'état de chacun d'au moins deux dispositifs de stockage thermique ou énergétique différents, le capteur d'état capturant une propriété physique du dispositif de stockage thermique ou énergétique.

10. Procédé selon la revendication 9, comprenant en outre :
le stockage de valeurs historiques de la sortie du capteur d'état de chacun d'au moins deux dispositifs de stockage thermique ou énergétique différents, et/ou
le stockage de valeurs de taux de variation de la sortie du capteur d'état de chacun d'au moins deux dispositifs de stockage thermique ou énergétique différents.

11. Procédé selon l'une quelconque des revendications précédentes, comprenant :
la transmission automatique du contenu énergétique prédit à une unité de commande d'un système de distribution d'électricité, pour être utilisé dans l'équilibrage du système de distribution d'électricité, ou à une unité de commande d'un autre réseau de chauffage ou de refroidissement.

12. Système mis en œuvre par ordinateur pour commander un réseau de chauffage ou de refroidissement distribué fournissant de l'énergie thermique à des bâtiments, le réseau de chauffage distribué comprenant au moins une source de chauffage ou de refroidissement et au moins deux dispositifs de stockage thermique différents, les au moins deux dispositifs de stockage thermique différents comprenant un tampon à base de MCP, chacun des au moins deux dispositifs de stockage thermique différents ayant un capteur d'état, le système comprenant :
des moyens pour charger un ensemble d'au moins trois modèles pour la capacité énergétique d'un dispositif de stockage thermique, l'un des modèles étant un modèle à hystérésis ;
des moyens pour mettre en correspondance chacun de ces modèles avec des données historiques de mesures du capteur d'état de chacun d'au moins deux dispositifs de stockage thermique différents ;
des moyens pour appliquer un critère de sélection de modèle pour identifier le modèle le plus approprié parmi les au moins trois modèles pour chacun des au moins deux dispositifs de stockage thermique différents,
des moyens pour prédire un contenu énergétique de chacun des au moins deux dispositifs de stockage thermique différents pour un instant spécifique sur la base du modèle sélectionné, et
des moyens pour piloter le réseau de chauffage distribué avec de l'énergie thermique provenant de l'un ou des deux des au moins deux dispositifs de stockage différents et/ou de la source de chauffage en utilisant la prédiction du contenu énergétique de chacun des au moins deux dispositifs de stockage thermique différents,
dans lequel l'énergie thermique est une énergie de chauffage ou de refroidissement.

13. Système mis en œuvre par ordinateur pour commander un réseau de distribution d'électricité fournissant de l'énergie électrique pour charger au moins deux dispositifs de stockage d'énergie différents choisis parmi un dispositif de stockage thermique d'un réseau thermique et un dispositif de stockage électrique, dans lequel le dispositif de stockage thermique est un tampon à base de MCP, chacun des au moins deux dispositifs de stockage différents ayant un capteur d'état, le système comprenant :
des moyens pour charger un ensemble d'au moins trois modèles pour la capacité énergétique d'un dispositif de stockage, l'un des modèles étant un modèle à hystérésis ;
des moyens pour mettre en correspondance chacun de ces modèles avec des données historiques de mesures du capteur d'état de chacun d'au moins deux dispositifs de stockage d'énergie différents ;
des moyens pour appliquer un critère de sélection de modèle pour identifier le modèle le plus approprié parmi les au moins trois modèles pour chacun des au moins deux dispositifs de stockage d'énergie différents,
des moyens pour prédire un contenu énergétique de chacun des au moins deux dispositifs de stockage d'énergie différents pour un instant spécifique sur la base du modèle sélectionné, et
des moyens pour piloter le réseau de distribution d'électricité afin de fournir de l'énergie électrique à l'un ou aux deux des au moins deux dispositifs d'énergie différents en fonction de la prédiction du contenu énergétique de chacun des au moins deux dispositifs de stockage d'énergie différents.

14. Pluralité de dispositifs de stockage d'énergie conçus pour être couplés à un réseau de distribution thermique ou électrique, au moins l'un de la pluralité de dispositifs de stockage d'énergie comprenant un tampon à base de MCP, chaque dispositif de stockage d'énergie comprenant :
une unité de commande pour prédire un état de charge du dispositif de stockage d'énergie, l'unité de commande ayant
des moyens pour recevoir des mesures d'un capteur d'état du dispositif de stockage d'énergie,
des moyens pour charger un ensemble d'au moins trois modèles pour une capacité énergétique du dispositif de stockage d'énergie, les au moins trois modèles étant identiques pour chaque dispositif de stockage d'énergie,
des moyens pour mettre en correspondance chacun de ces modèles avec des données historiques de mesures du capteur d'état du dispositif de stockage d'énergie,
des moyens pour appliquer un critère de sélection de modèle pour identifier le modèle le plus approprié, et
des moyens pour prédire un contenu énergétique du dispositif de stockage d'énergie pour un instant spécifique sur la base du modèle sélectionné,
dans lequel l'un des modèles est un modèle à hystérésis.

15. Produit formant programme informatique pour exécuter le procédé selon l'une quelconque des revendications 1 à 11, lorsqu'il est exécuté sur un moteur de traitement.
